# EUROPEAN PATENT APPLICATION

(11) **EP 3 957 659 A1**
(43) Date of publication of application: **23.02.2022**
(21) Application number: 20191689.7
(22) Date of filing: 19.08.2020
(51) Int. Cl.: C08F 120/18, C08F 220/18

(54) **FUNCTIONALIZED POLYMERS**

(71) Applicant: Evonik Operations GmbH, 45128 Essen (DE)
(72) Inventor: AMAJJAHE, Sadik, 40591 Düsseldorf (DE); HELL, Kerstin, 45141 Essen (DE); MENTEL, Matthias, 44357 Dortmund (DE)
(74) Representative: Evonik Patent Association

(57) **Abstract**

The invention relates to functionalized polymers, a process for producing functionalized polymers and the use of functionalized polymers, especially in the field of personal care.

## Description

### Field of the invention

The invention relates to functionalized polymers, a process for producing functionalized polymers and the use of functionalized polymers, especially in the field of personal care.

### Prior art

US2016250137 discloses personal care compositions comprising an oil in water emulsion, at least one C12-C22 side chain crystalline polymer wherein the side chain crystalline polymer has a crystalline melting point from 35 to 70° C; and, at least one active compound that interacts with skin wherein the active compound is incorporated into a crystalline matrix of the side chain crystalline polymer and wherein the active ingredient is released from the crystalline matrix at body temperatures, wherein the personal care composition is devoid of sunscreen actives.

It is an object of the invention to provide functionalized polymers with supreme properties in personal care applications.

### Description of the invention

It was found that, surprisingly, that the polymers according to claim 1 bear supreme properties in personal care applications.

The present invention therefore provides special polymers, that are characterized in, that the polymer has a polydispersity index PDI of > 4.5.
The invention further provides a process for producing polymers as well as personal care formulations containing certain polymers.

An advantage of the current invention is, that the polymers lead to a higher richness of formulations.
A further advantage of the current invention is, that the polymers offer an outstanding compatibility with organic UV-filters.
Another advantage of the current invention is, that the polymers lead to an improved sensory and dry skin feel.
A further advantage of the current invention is, that the polymers create a protective film against malodor.

The polymers of the present invention, the process of the present invention, the preparations obtainable with these and their use will now be described by way of example without any intention to restrict the invention to these exemplary embodiments. Where ranges, general formulae or classes of compounds are recited herein below, these shall encompass not just the corresponding ranges or groups of compounds explicitly mentioned, but also all sub-ranges and sub-groups of compounds obtainable by removing individual values (ranges) or compounds. When documents are cited in the context of the present description, their contents shall fully form part of the disclosure content of the present invention.
"natural numbers" as used in the present invention do not encompass 0 (zero).
Unless stated otherwise, all percentages (%) given are percentages by weight.
Unless stated otherwise, all ppm given are ppm by weight.
Viscosity values recited in the context of this invention are to be understood as meaning, unless otherwise stated, dynamic viscosities which can be determined using methods familiar to a person skilled in the art. Measurements recited herein below were determined at a pressure of 101325 Pa and a temperature of 23° C, unless otherwise stated.

Claimed is a polymer comprising monomeric units of general formula (I) 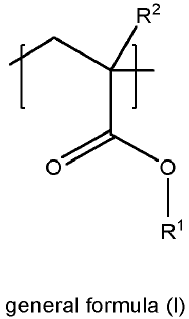 with
R¹ = independently from each other selected from the group consisting of alkyl radicals and alkenyl radicals, which both may be branched or straight chained, unsubstituted or substituted, preferred are alkyl radicals having 6 to 30 carbon atoms, preferably 10 to 26, more preferred 12 to 24,
R² = independently from each other selected from the group consisting of H and methyl, preferably H,
with the monomeric units of general formula (I) making up for at least 90 wt.-%, preferably 95 wt.-%, of the total weight of the polymer,
characterized in, that the polymer has a polydispersity index PDI of 4.5 to 20, preferably 4.6 to 15, more preferably 4.8 to 13.

The polymers according to the invention are homopolymers and/or copolymers, including random copolymers, graft copolymers and block copolymers, preferably homopolymers.

Preferably the polymer according to the present invention consists of monomeric units of general formula (I)

The at least 90 wt.-% of all R¹ can be mixtures, of course, and it is preferred, that the at least 90 wt.-% of all R¹ contain a mixture of 0 wt.-% - 5 wt.-% cetyl, 40 wt.-% - 55 wt.-% stearyl, 1 wt.-% - 15 wt.-% arachidyl, 35 wt.-% - 45 wt.-% behenyl and 0 wt.-% to 5 wt.-% lignoceryl, the wt.-% referring to the sum of all R¹ present in the polymer.
It is alternatively preferred, that the at least 90 wt.-% of all R¹ contain a mixture of 0 wt.-% - 3 wt.-% myristyl, 40 wt.-% - 50 wt.-% cetyl, 40 wt.-% - 50 wt.-% stearyl and 0 wt.-% - 1 wt.-% arachidyl, the wt.-% referring to the sum of all R¹ present in the polymer.

The at least 90 wt.-% of all R¹ preferably are selected from the group of linear alkyl and alkenyl, preferably alkyl, radicals with 12 to 22 carbon atoms, with stearyl and behenyl especially preferred.

Preferably, the polymer according to instant invention is characterized in, that the polymer has a melting point in the range of 31 °C to 75 °C, preferably 35 °C to 72 °C, more preferably 40 °C to 69 °C.

Preferably, the polymer according to instant invention is characterized in, that the polymer has a number average molecular weight Mₙ in the range of from 3,000 to 300,000, preferably 4,000 to 200,000, more preferably 5,000 to 100,000, g/mol.

Preferably, the polymer according to instant invention is characterized in, that the polymer has a weight average molecular weight M_{w} in the range of from 13,500 to 6,000,000, preferably 18,000 to 3,000,000, more preferably 24,000 to 1,300,000, g/mol.

Preferably, the polymer according to instant invention is characterized in, that
R¹ = independently from each other selected from the group consisting of stearyl and/or behenyl, R² = H.

The polymers of the present invention are obtainable in various ways. The polymers of the present invention are preferably obtained by the herein below described process of the present invention. Therefore, a process for preparing a polymer, preferably a polymer of the instant invention, is claimed comprising the steps of
A) providing 1 part by weight of monomers of general formula (II) 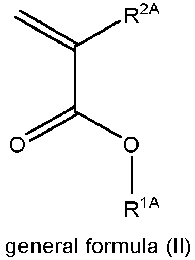 with
   R^{1A} = independently from each other selected from the group consisting of alkyl radicals and alkenyl radicals, which both may be branched or straight chained, unsubstituted or substituted, preferred hydrocarbons are alkyl radicals having 6 to 30 carbon atoms, preferably 10 to 26, more preferred 12 to 24,
   R^{2A} = independently from each other selected from the group consisting of H and methyl, preferably H,
B) addition of at least one initiator to polymerize the monomers and performing a radical polymerisation,
C) addition of 1 to 15, preferably 2 to 10, more preferably 3 to 8, further parts by weight of monomers of general formula (II),
D) addition of at least one initiator to polymerize the monomers and performing a radical polymerisation, optionally
E) removal of excess of monomers, and, optionally,
F) purification of the obtained polymer.

R^{1A} preferably is independently from each other selected from the group consisting of unsubstituted alkyl radicals and alkenyl radicals, more preferably alkyl radicals having 6 to 30, preferably 10 to 26, more preferred 12 to 24, carbon atoms.
R^{1A} more preferably is independently from each other selected from the group consisting of linear alkyl and alkenyl, preferably alkyl, radicals with 12 to 22 carbon atoms, with stearyl and behenyl especially preferred.

The process according to the instant invention is preferably a process for preparing a polymer that has a polydispersity index PDI of greater than 4.5.

The initiator added in process step B) and D) according to the instant invention is an initiator, which can be solid, liquid or dissolved in solvent.
The same or a different initiator can be added in process step B) and D) according to the instant invention.

Mixtures of initiators can be added in process step B) and/or D) according to the instant invention without limiting the scope of the invention.
The initiator added in process step B) and D) according to the instant invention is preferably selected from the group of 2,2'-azo-bis(2-methyl propionitrile), 2,2'-azodi(2-methylbutyronitrile), 1,1'-azodi(hexahydrobenzonitrile), 4,4'-azo-bis(4-cyanovaleric acid), 2,2'-azo-bis(2,4-dimethyl valeronitrile), and 2,2'-azo-bis(2-cyclopropyl propionitrile), 2,2'-azo-bis(2-cyclobutyl propionitrile), 2,2'-azo-bis(2-cyclobutyl propionitrile), 2,2'-azo-bis (2,4-dimethyl valeronitrile), 1,1'-azo-bis(1-cycloheptanenitrile), 2,2'-azo-bis(methylheptylonitrile), 2,2'-azo-bis(2-cyclohexyl propionitrile), azo-bis-isobutyramidine 2HCl, phenyl-azo-triphenylmethane, 4-hydroxyphenyl-azo-triphenylmethane, peroxide and peroxy compounds, such as benzoyl peroxide, tert-butyl peroxy pivalate, tert-amyl peroxypivalate, acetyl peroxide, propionyl peroxide, 2-isopropionyl peroxide, butyryl peroxide, diisobutyryl peroxide, dilauroyl peroxide, didecanoyl peroxide, cumyl peroxyneodecanoate, 1,1,3,3-tetramethylbutyl peroxyneodecanoate, tert-butyl peroxydiethylacetate, tert-amyl peroxy-2-ethylhexanoate, tert-amyl peroxy-2-ethylhexanoate, 2-methoxybenzoyl peroxide, cumyl peroxyneoheptanoate, tert-amyl peroxyneodecanoate, tert-butyl peroxyneodecanoate, tert-butyl peroxyneoheptanoate, tert-amyl peroxyacetate, 4 -benzylidenebutyryl peroxide, methyl phthaloyl peroxide, 1,1-di(tert-amylperoxy)cyclohexane, 3,6,9-triethyl-3,6,9-trimethyl-1,4,7-triperoxonane, hydroperoxides such as Isopropylcumyl hydroperoxide, 1,1,3,3-tetramethylbutyl hydroperoxide, cumyl hydroperoxide, tert-Butyl hydroperoxide, tert-amyl hydroperoxide, carbonates such as diethyl peroxydicarbonate, tert-butylperoxy isopropyl carbonate, tert-butylperoxy 2-ethylhexyl carbonate, di-sec-butyl peroxydicarbonate, diisopropyl peroxydicarbonate, di(4-tert-butylcyclohexyl) peroxydicarbonate, di(2-ethylhexyl) peroxydicarbonate, dicetyl peroxydicarbonate, dimyristyl peroxydicarbonate, tert-amylperoxy 2-ethylhexyl carbonate, tert-butylperoxy isopropyl carbonate, tert-butylperoxy 2-ethylhexyl carbonate, ethyl tert-butyl peroxalate; benzyl (tert-butyl peroxy) oxalate; tertiary-butyl-N-(3-tolylperoxy) carbamate and persalt compounds, such as potassium persulfate and mixtures thereof,
wherein 2,2'-azo-bis(2-methyl propionitrile), 2,2'-azodi(2-methylbutyronitrile), dilauroyl peroxide, cumyl peroxyneodecanoate, tert-amyl peroxy-2-ethylhexanoate are especially preferred.

Process step B) and/or process step D) in the process according to the instant invention are preferably characterized in, that the at least one initiator is added in an amount of from 50 to 100,000 ppm, preferably from 500 to 50000 ppm, more preferably 2000 to 25000 ppm, per each process step B) and/or D), wherein the ppm refer to the total weight of all monomers provided in process step A) (for the initiator added in step B)) and/or process step C) (for the initiator added in step D)), respectively.

Process step B) and / or D), preferably B) only), in the process according to the instant invention are preferably characterized in, that the addition of the at least one initiator to polymerize the monomers is conducted in at least two portions while performing the radical polymerisation after each addition of the initiator portion.

Process step B) and/or D) in the process according to the instant invention is conducted in neat or in a solvent, preferably in neat. The amount of solvent can vary from 1 wt.-%to 95 wt.-%, preferably from 2 wt.-%to 50 wt.-%, more preferably from 3 wt.-%to 40 wt.-%, wherein the weight percent refer to the total weight all monomers provided in process step A).
Possible solvents can be but not are limited to: alcohols like methanol, ethanol, isopropanol, butanol, hexanol, tert-butanol, isoamyl alcohol, glycol, hexylene glycol, propylenglycol, butylglycol, butyldiglycol, glycerine, ketones like ethylmethyl ketone, methylbutyl ketone, acetone, ester like methyl acetate, ethyl acetate, isopropylacetate, propyl acetate, butyl acetate, hexylacetate, isooctyl acetate, methoxypropylacetate, acids like formic acid, acetic acid, propionic acid, ether like diethylether, dibutylether, tert-butylmethylether, petroleum ether, tetrahydrofuran, dioxane, polyethers, carbonates like ethylencarbonate, propylencarbonate, dimethylcarbonate, diethylcarbonate, dipropylcarbonate, nitriles like benzonitrile, acetonitrile, toluene, xylene, ionic liquids, water, organic oils such as TEGOSOFT^{®} types and mixtures thereof.

In process step A) and/or C), preferably A) and C), in the process according to the instant invention at least one chain transfer agent can be added, preferably in an amount such that the weight ratio of added initiator in process step B) and/or D) and the chain transfer agent added in the step A) (for the initiator added in step B)) and/or C) (for the initiator added in step D)), respectively, is in the range of 1 : 5 to 1 : 0.01, preferably 1 : 1 to 1 : 0.02, more preferably 1 : 0.5 to 1 : 0.05.

The chain transfer agent preferably added in process step A) and/or C), preferably A) and C), in the process according to the instant invention is selected from at least one of the group of tetrachloromethane, bromotrichloromethane, Isooctyl 3-mercaptopropionate, 4-methylbenzenethiol, tert-nonyl mercaptan, pentaerythritol tetrakis(2-mercaptoacetate), pentaerythritol tetrakis(3-mercaptopropionate), 4,4'-thiobisbenzenethiol, trimethylolpropane tris(3-mercaptopropionate), 1,8-dimercapto-3,6-dioxaoctane, n-dodecanethiol, ethyl mercaptan, mercaptoethanol, mercaptopropanol, mercaptobutanol, mercaptohexanol, mercaptooctanol, propanethiol, dithiothreitol, cysteine, homocysteine, glutathione, tert-dodecanethiol, thioglycolic acid, dimercaptosuccinic, 2,3-dimercapto-1-propanesulfonic acid, acetylcysteine and thiophenol.

In an alternative process according to the instant invention no chain transfer agent is present in the process.

Process step B) and D) in the process according to the instant invention is preferably conducted at a temperature of 10 °C to 250 °C, preferably of 20 °C to 200 °C and more preferably of 60 °C to 180°C.

Process step B) and D) in the process according to the instant invention is preferably conducted at a pressure of 0.5 to 20 bar, more preferably from 1 to 5 bar and even more preferably at atmospheric pressure.

Process step B) and D) in the process according to the instant invention is preferably conducted at a pH of 3 to 10, more preferably 4 to 9 and even more preferably 5 to 8.

Process step B) and D) in the process according to the instant invention is preferably can be conducted not only in daylight but also in the absence of light and is preferably conducted in the absence of light.

Process step E) in the process according to the instant invention serves the purpose to remove excess of monomers.
It is a preferred process according to the instant invention when step E) in the process according to the instant invention is a chasing step. Thus, it is preferred, when step E) in the process according to the instant invention comprises the addition of further initiator after completion of process step D), in order to remove excess of monomer. The further initiator is preferably applied in concentrations of 0.01 wt.-% to 5 wt.-%, preferably 0.1 wt.-%to 2.5 wt.-%, more preferably 0.2 wt.-% to 2 wt.-%, wherein the weight percent refer to the total weight of all monomers provided in process step A) and C). The addition of further initiator in step E) in the process according to the instant invention is preferably repeated up to four times, preferably twice, more preferably once. The initiator added in step E) of the instant invention is selected from the same initiators that can be used in step B) and D) according to the instant invention, with the same level of preferability. Also, the reaction conditions in process E) of the instant invention are selected from the same conditions that can be applied in step B) and D) according to the instant invention, with the same level of preferability.

The further clean-up step F) in the process according to the instant invention can be selected from extraction with water and/or organic solvents, a distillation with or without vacuum and/or recrystallization from water and/or organic solvents.
Step F) in the process according to the instant invention preferably comprises a water steam distillation. Here, some water is applied to the reaction mixture in order to remove excess monomers, undesired side products, decomposed iniator and/or solvent from the reaction. The amount of added water can vary from 0.1 wt.-% to 20 wt.-%, preferably 0.5 wt.-% to 10 wt.-%, more preferably 1 wt.-% to 5 wt.-%, wherein the weight percent refer to the total weight of all monomers provided in process step A) and C).

It is preferred, that step E), more preferably step E) and step F), is/are comprised in the process according to the instant invention.

In a preferred process according to the instant invention the monomers of general formula (II) make up for at least 90 wt.-%, preferably 95 wt.-%, of all polymerizable monomers present in the total process.

A further subject matter of the present invention is a polymer obtainable by the process of the instant invention. The polymer obtainable by this process preferably is characterized in, that it has a polydispersity index PDI of greater than 4.5.

A further subject matter of the present invention is a personal care formulation containing at least one polymer of the instant invention or at least one polymer obtainable by the process of the instant invention.
Furthermore, the formulations according to the invention can comprise at least one additional component selected from the group of
emollients,
emulsifiers,
thickeners/viscosity regulators/stabilizers,
UV photoprotective filters,
antioxidants,
hydrotropes (or polyols),
solids and fillers,
film formers,
pearlescent additives,
deodorant and antiperspirant active ingredients,
insect repellents,
self-tanning agents,
preservatives,
conditioners,
perfumes,
dyes,
odour absorbers,
cosmetic active ingredients,
care additives,
superfatting agents,
solid particles,
solvents,
wherein perfums, solid particles, and/or UV photoprotective filters, especially organic filters, are preferably comprised.
The preferably comprised solid particles are characterized by having a mean particle size d50 of from 0,1 to 1000 µm.
The mean particle size d50 is preferably determined by light scattering in a laser beam with a Malvern Mastersizer 2000. The determination is done using the dry measurement. Each time 20 to 40 g powder are fed using a Scirocco dry powder feeder. The particle flow is controlled operating the vibrating tray with a feed-rate of 70 %. The dispersive air pressure is adjusted to be 3 bar. Each measurement is accompanied by a measurement of the background (10 seconds / 10,000 single measurements). The measurement time of the sample is 5 seconds (5,000 single measurements). The refraction index as well as the blue light value are fixed to be 1.52. The evaluation is done using the Mie-theory.
Substances which can be used as exemplary representatives of the individual groups to be comprised in the formulation according to the invention are known to the person skilled in the art and can be found for example in the German application DE 102008001788.4. This patent application is hereby incorporated by reference and thus forms part of the disclosure.
As regards further optional components and the amounts of these components used, reference is made expressly to the relevant handbooks known to the person skilled in the art, for example K. Schrader, "Grundlagen und Rezepturen der Kosmetika [Fundamentals and Formulations of Cosmetics]", 2nd edition, page 329 to 341, Hüthig Buch Verlag Heidelberg.
The amounts of the respective additives are dependent on the intended use.
Typical guide formulations for the respective applications are known prior art and are contained for example in the brochures of the manufacturers of the respective base materials and active ingredients. These existing formulations can generally be adopted unchanged. If required, however, the desired modifications can be undertaken without complication by means of simple experiments for the purposes of adaptation and optimization.

Instantly claimed is also the use of at least one polymer of the instant invention or at least one polymer obtainable by the process of the instant invention for forming a film on a surface, especially skin and/or hair.
Instantly claimed is also the use of at least one polymer of the instant invention or at least one polymer obtainable by the process of the instant invention for retaining a fragrance on a surface, especially skin and/or hair.
Instantly claimed is also the use of at least one polymer of the instant invention or at least one polymer obtainable by the process of the instant invention for giving a dry skin feel to formulations, especially emulsions.
Instantly claimed is also the use of at least one polymer of the instant invention or at least one polymer obtainable by the process of the instant invention for the dispersion of solid pigments. The solid pigments are those preferably comprised in the formulation according to the present invention.
Two or more polymers according to the invention can be used together.

The examples adduced hereinafter describe the present invention by way of example, without any intention that the invention, the scope of application of which is apparent from the entirety of the description and the claims, be restricted to the embodiments specified in the examples.

### Brief description of the figures:

Figure 1: Grayscale images, that were analysed for clarity of oil gels
Figure 2: Air bubble corrected images o figure 1 used for quantification.

### Examples:

### Molecular Weight Determination by Gel Permeation Chromatography (GPC):

GPC measurements for the determination of polydispersity PDI which is the quotient of the weight-average molecular weight Mw and the number average molecular weight Mn were carried out under the following measuring conditions:
The sample was prepared by making a 10 mg/mL solution using tetrahydrofuran as the diluent. The sample preparation was placed in the oven at 54°C for ten minutes then on a wrist action shaker for 60 minutes to aid dissolution. Upon visual inspection, the sample appeared to be completely dissolved in the diluent. The sample prepared was analyzed using two 300 x 7.5 mm polypore columns (manufactured by Agilent Technologies), a Waters 2695 chromatographic system, tetrahydrofuran mobile phase and refractive index detection. The sample was filtered by 0.45 um Nylon filters prior to injecting into the liquid chromatograph.
The standards used for calibration are EasiVial narrow polystyrene (PS) standards from Agilent Technologies. Narrow polystyrene standards ranging from 2.520.000 to 162 Daltons were used for calibration. The system uses a PSS SECcurity 1260 RI detector. The PS calibration curve is used to determine the molecular weight averages. The recording of diagrams and determination of the different molecular weights is conducted by the Win GPC Unichrom 8.1 software.

### Melting Point determination by DSC:

This method describes a generalized procedure for determining the melting temperatures of polymers by Differential Scanning Calorimetry (DSC). The method is based on ASTM E7941 and ASTM D 34182. Calibration of the DSC is done in accordance with ASTM E 9672.

### Chemicals:

Behenyl acrylate (abcr)
Stearyl acrylate (abcr)
2-mercapto ethanol (Aldrich)
Isopropyl Alcohol (Aldrich)
*tert*-Butyl peroxy-3,5,5-trimethylhexanoate (Akzo Nobel)
*tert*-Amylperoxy-2-ethylhexanoate (Akzo Nobel)

### Example 1:

4 g of Isopropanol and 16 g of Stearyl acrylate were placed in a four-neck flask equipped with a KPG blade stirrer, an internal thermometer, two dropping funnel, reflux condenser and an extension for further two necks under agitation after oxygen was removed from the system through nitrogen purge for about 20 min and heated up to 80 °C. 0.27 g of t*ert*-Amylperoxy-2-ethylhexanoate, dissolved in 0.75 g of Isopropanol, were added and stirred for further 30 minutes. Afterwards 64 g of stearyl acrylate and 1.1 g of t*ert*-Amylperoxy-2-ethylhexanoate, dissolved in 3 g of Isopropanol, were added within 60 minutes and stirred for further 3 hours at 80 °C. The temperature was increased to 125 °C and residual solvent was distilled off. Finally, 0.4 g of *tert-*Butyl peroxy-3,5,5-trimethylhexanoate were added within 15 minutes and stirred for 60 minutes at 125 °C. This procedure was repeated once.
Mn= 11000 g/mol, Mw= 76000 g/mol, PDI=6.9
Tm=49 °C

### Example 2:

122 g stearyl acrylate and 0.2 g of 2-mercapto ethanol were placed in a four-neck flask equipped with a KPG blade stirrer, an internal thermometer, two dropping funnel, reflux condenser and an extension for further two necks under agitation after oxygen was removed from the system through nitrogen purge for about 20 min and heated up to 100 °C. 0.29 g of t*ert*-Amylperoxy-2-ethylhexanoate was added within 5 minutes and stirred for further 60 minutes at 125 °C. Afterwards further 1.8 g of t*ert*-Amylperoxy-2-ethylhexanoate was added within 25 minutes and stirred for 5 minutes. Then 487 g of stearyl acrylate, 0.8 g of 2-mercapto ethanol and 8.6 g of t*ert*-Amylperoxy-2-ethylhexanoate were added within 90 minutes and stirred for further 30 minutes at 125 °C. Finally, 3 g of *tert*-Butyl peroxy-3,5,5-trimethylhexanoate were added within 15 minutes and stirred for 60 minutes at 125 °C. This procedure was repeated twice.
Mn= 9900 g/mol, Mw= 98000 g/mol, PDI=9.9
Tm=47.3 °C

### Example 3:

143 g behenyl acrylate and 0.2 g of 2-mercapto ethanol were placed in a four-neck flask equipped with a KPG blade stirrer, an internal thermometer, two dropping funnel, reflux condenser and an extension for further two necks under agitation after oxygen was removed from the system through nitrogen purge for about 20 min and heated up to 100 °C. 0.29 g of t*ert*-Amylperoxy-2-ethylhexanoate was added within 5 minutes and stirred for further 60 minutes at 125 °C. Afterwards further 1.8 g of t*ert*-Amylperoxy-2-ethylhexanoate was added within 25 minutes and stirred for 5 minutes. Then 487 g of stearyl acrylate, 0.8 g of 2-mercapto ethanol and 8.6 g of t*ert*-Amylperoxy-2-ethylhexanoate were added within 90 minutes and stirred for further 30 minutes at 125 °C. Finally, 3 g of *tert*-Butyl peroxy-3,5,5-trimethylhexanoate were added within 15 minutes and stirred for 60 minutes at 125 °C. This procedure was repeated twice.
Mn= 9500 g/mol, Mw= 89000 g/mol, PDI=9.4
Tm=64 °C

### Comparative Example:

20 g of Isopropanol are placed in a four-neck flask equipped with a KPG blade stirrer, an internal thermometer, two dropping funnel, reflux condenser and an extension for further two necks under agitation after oxygen was removed from the system through nitrogen purge for about 20 min and heated up to 80 °C. 1.03 g of t*ert*-Amylperoxy-2-ethylhexanoate, dissolved in 4.1 g of Isopropanol, 60 g of stearyl acrylate and 0.1 g of 2-mercapto ethanol were added within 90 minutes and stirred for further 3 hours. The temperature was increased to 125 °C and residual solvent was distilled off supported by vacuum of 50 mbar. Afterwards, 0.3 g of *tert*-Butyl peroxy-3,5,5-trimethylhexanoate were added and stirred for 60 minutes at 125 °C. This procedure was repeated again.
Mn= 4200 g/mol, Mw= 11000 g/mol, PDI=2.6
Tm=49 °C

### Application example 1: Higher richness of formulations

Functionalized polymers according to the invention have been found to have advantages with regard to skin feel. To illustrate the effect, oil-in-water (O/W) sun care emulsions according to the following table were prepared on 200 g scale. Formulation with functionalized polymer not according to the current invention was prepared for reference.

| **Phase** | **Raw material** | **A** | **B** | **C** |
|---|---|---|---|---|
| A | TEGO^{®} Care PBS 6 MB (Polyglyceryl-6 Stearate, Polyglyceryl-6 Behenate) | 3.00 | 3.00 | 3.00 |
| | TEGIN^{®} M Pellets MB (Glyceryl Stearate) | 0.50 | 0.50 | 0.50 |
| | TEGO^{®} Alkanol (Cetearyl Alcohol) | 0.50 | 0.50 | 0.50 |
| | TEGOSOFT^{®} XC MB (Phenoxyethyl Caprylate) | 3.00 | 3.00 | 3.00 |
| | Bis-Ethylhexyloxyphenol Methoxyphenyl Triazine (Tinosorb S, BASF) | 3.00 | 3.00 | 3.00 |
| | Butyl Methoxydibenzoylmethane | 2.00 | 2.00 | 2.00 |
| | Ethylhexyl Salicylate | 3.00 | 3.00 | 3.00 |
| | Octocrylene | 8.00 | 8.00 | 8.00 |
| | Homosalate | 3.00 | 3.00 | 3.00 |
| | Ethylhexyl Triazone | 1.50 | 1.50 | 1.50 |
| | **Organic polymer (example 1)** | **3.00** | | |
| | **Organic polymer (example 2)** | | **3.00** | |
| | **Organic polymer (comparative example)** | | | **3.00** |
| B | Glycerin | 3.00 | 3.00 | 3.00 |
| | Water | ad 100 | ad 100 | ad 100 |
| C | Acrylates/C10-30 Alkyl Acrylate Crosspolymer | 0.20 | 0.20 | 0.20 |
| | TEGOSOFT^{®} XC MB (Phenoxyethyl Caprylate) | 0.80 | 0.80 | 0.80 |
| D | Sodium Hydroxide (10% in water) | 0.60 | 0.60 | 0.60 |
| E | Verstatil^{®} PC (Phenoxyethanol, Caprylyl Glycol) | 1.00 | 1.00 | 1.00 |

Viscosity was determined with a Brookfield RV-DV I device, spindle 93, 10 rpm, one month after preparation. All formulations showed similar viscosities in the range of 24-32 Pa·s and exhibited pasty-soft textures.
Skin feel of the emulsions was evaluated by sensory panel testing. Thirteen trained panelists applied 20 µL of each formulation on a defined test area of approx. 10 cm² on the volar forearm, not knowing their composition. Formulations were distributed using a finger within the test area by circling movements until complete absorption (or maximum 60 circles). Evaluation of skin feel parameters took place during distribution of the formulation on the skin.
"Richness" of formulations is desirable in functional cosmetics like anti-aging applications, where a rich skin feel is associated with an anti-aging activity by the consumer. Richness is not only indicated by the viscosity of a formulation, but also by behaviour of the formulation when applied on skin and mechanical breakdown of the emulsion structures, best represented by skin feel parameters like 'spreadability' and 'waxiness'. The lower the spreadability and the higher the waxiness, the higher the perceived richness of a formulation.
People were asked to rank the three formulations with respect to spreadability from 0 (very difficult to spread) to 10 (very easy to spread) and with respect to waxiness from 0 (not waxy) to 10 (very waxy). Scores from all panelists were averaged and average ratings were subjected to factor analysis (one-factorial principle components analysis, varimax rotation) to extract the relative "richness" of the three formulations, which is obtained by normalization of the data on a scale from -1 to +1. In this way, a value of -1 corresponds to the lowest richness (relatively light; high spreadability and low waxiness), a value of +1 corresponds to highest richness (relatively low spreadability and high waxiness).

| **Formulation** | **A** (example 1) | **B** (example 2) | **C** (comparative example) |
|---|---|---|---|
| Spreadability, average | 5.33 | 4.14 | 6.20 |
| Waxiness, average | 6.27 | 7.79 | 5.33 |
| **Richness, relative** | -0.124 | +1.00 | -0.876 |

Surprisingly, it was found that organic polymers according to the current invention (examples 1 and 2) have more pronounced "richness" than organic polymer not according to the current invention (comparative example), which makes them ideally suited for anti-aging applications, among others.

### Application example 2: Compatibility with organic UV filters (viscosity and clarity of oil gels)

Functionalized polymers according to the current invention have been found to have advantages with regard to UV filter compatibility. To illustrate the effect, oil gel systems with organic UV filters according to the following table were prepared on 50 g scale. Oil gel with functionalized polymer not according to the current invention was prepared for reference.

| **Raw material** | **A** | **B** | **C** | **D** |
|---|---|---|---|---|
| Bis-Ethylhexyloxyphenol Methoxyphenyl Triazine | 3.00 | 3.00 | 3.00 | 3.00 |
| Butyl Methoxydibenzoylmethane | 2.00 | 2.00 | 2.00 | 2.00 |
| Ethylhexyl Salicylate | 3.00 | 3.00 | 3.00 | 3.00 |
| Octocrylene | 8.00 | 8.00 | 8.00 | 8.00 |
| Homosalate | 3.00 | 3.00 | 3.00 | 3.00 |
| Ethylhexyl Triazone | 1.50 | 1.50 | 1.50 | 1.50 |
| TEGOSOFT XC (Phenoxyethyl Caprylate) | 4.40 | 4.40 | 4.40 | 4.40 |
| TEGOSOFT DEC (Diethylhexyl Carbonate) | 72.00 | 72.00 | 72.00 | 72.00 |
| **Organic polymer (example 1)** | **3.00** | | | |
| **Organic polymer (example 2)** | | **3.00** | | |
| **Organic polymer (example 3)** | | | **3.00** | |
| **Organic polymer (comparative example)** | | | | **3.00** |

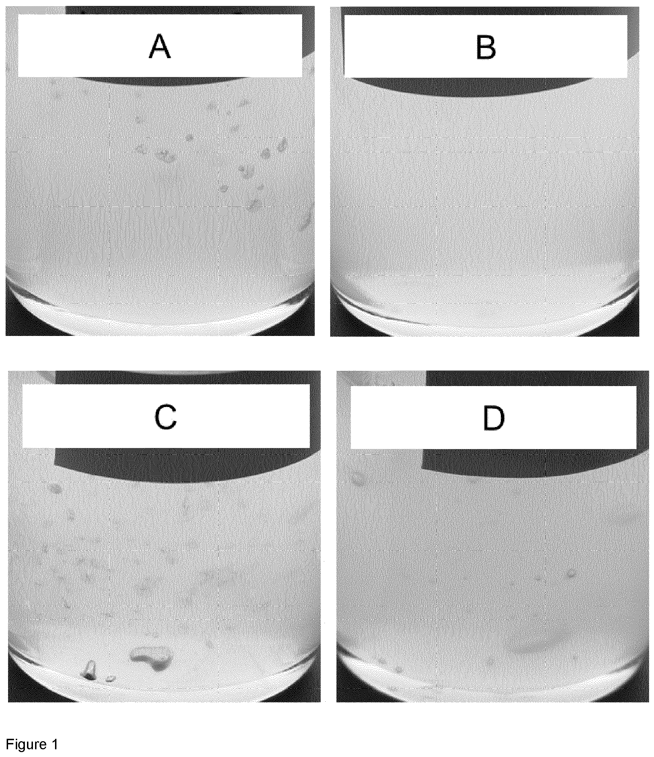

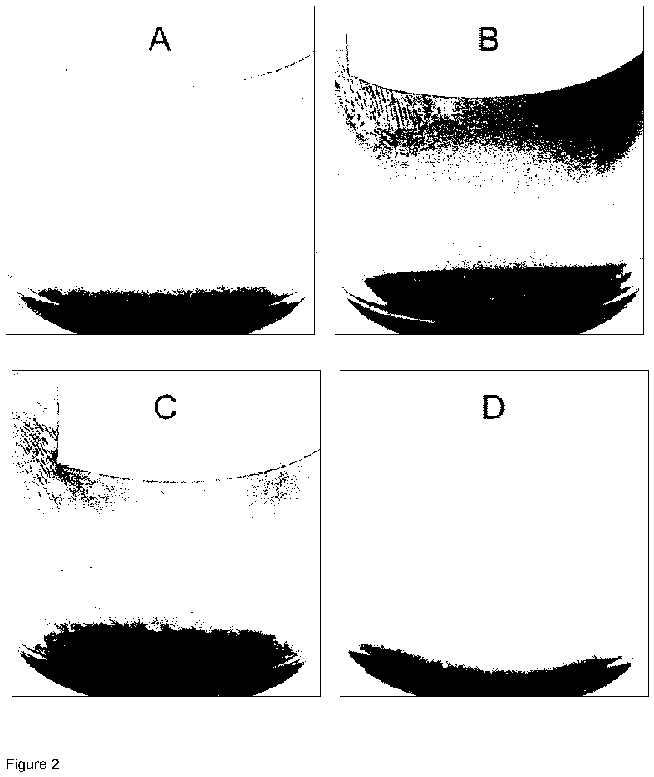

Oil gels were prepared by mixing of ingredients and heating to 60-70°C until a clear solution is obtained. After cooling with gentle stirring, when first turbidities were observed, it was homogenized with UltraTurrax for 30 seconds at 20,500 rpm. The mixture was immediately filled into glass bottles and left untouched without further stirring for the oil gels to crystallize.
A high compatibility of oil / UV filters and organic polymer is indicated by a high viscosity and simultaneously a high clarity of the resulting oil gel. The general assumption is that in such case the organic UV filters and emollients are most effectively / homogeneously embedded into the three-dimensional network which is formed by the organic polymer.
Viscosity of oil gels were determined with a Brookfield RV-DV I device, spindle 96, 100 rpm, one week after preparation.
Pictures of the oil gels in the glass bottles were taken under standardized conditions with a light source behind the bottles.
Grayscale images (see figure 1) were analysed for clarity of the oil gels by image processing using ImageJ 1.51 k. The higher the clarity of oil gel, the more background light passes through and the brighter the image. Images were therefore converted into black and white images by thresholding, precisely by removing all pixels with grayscale values from 0-209 (converting to 0=white) and converting all grayscale values from 210-255 to black (=255). In case of incorporation of air bubbles as indicated by white circles in the resulting binary images, these were manually corrected by filling with surrounding (black) pixel information (compare figure 2). In this way the clarity of oil gels can be quantified by the amount of black pixels, or, more precisely, the area percentage covered with black pixels.
Results are summarized in the following table.

| **Oil gel** | **A** | **B** | **C** | **D** |
|---|---|---|---|---|
| Viscosity [Pa·s] | 4.2 | 15 | 11 | 4.0 |
| image area-% black pixels | 10.1 | 33.2 | 18.3 | 7.86 |

Surprisingly, it was found that the higher the polydispersity index of the organic polymer, the higher the viscosity and clarity of the resulting oil gel. This means that a higher PDI gives better interaction in complex mixtures with cosmetic emollient (mixtures) and a combination of various organic UV filters. The experiment shows that organic polymers according to the invention are most compatible with organic UV filters which makes them ideally suited for sun care applications, among others.

### Application example 3: Compatibility with organic UV filters (in vitro UVAPF/SPF of sun care formulations)

Functionalized polymers according to the current invention have been found to have advantages with regard to UV filter compatibility. To illustrate the effect, oil-in-water (O/W) sun care emulsions according to the following table were prepared on 200 g scale. Formulation with functionalized polymer not according to the current invention was prepared for reference.

| **Phase** | **Raw material** | **A** | **B** | **C** |
|---|---|---|---|---|
| A | TEGO^{®} Care PBS 6 MB (Polyglyceryl-6 Stearate, Polyglyceryl-6 Behenate) | 3.00 | 3.00 | 3.00 |
| | TEGIN^{®} M Pellets MB (Glyceryl Stearate) | 0.50 | 0.50 | 0.50 |
| | TEGO^{®} Alkanol (Cetearyl Alcohol) | 0.50 | 0.50 | 0.50 |
| | TEGOSOFT^{®} XC MB (Phenoxyethyl Caprylate) | 3.00 | 3.00 | 3.00 |
| | Bis-Ethylhexyloxyphenol Methoxyphenyl Triazine (Tinosorb S, BASF) | 3.00 | 3.00 | 3.00 |
| | Butyl Methoxydibenzoylmethane | 2.00 | 2.00 | 2.00 |
| | Ethylhexyl Salicylate | 3.00 | 3.00 | 3.00 |
| | Octocrylene | 8.00 | 8.00 | 8.00 |
| | Homosalate | 3.00 | 3.00 | 3.00 |
| | Ethylhexyl Triazone | 1.50 | 1.50 | 1.50 |
| | **Organic polymer (example 1)** | **3.00** | | |
| | **Organic polymer (example 3)** | | **3.00** | |
| | **Organic polymer (comparative example)** | | | **3.00** |
| B | Glycerin | 3.00 | 3.00 | 3.00 |
| | Water | ad 100 | ad 100 | ad 100 |
| C | Acrylates/C10-30 Alkyl Acrylate Crosspolymer | 0.20 | 0.20 | 0.20 |
| | TEGOSOFT^{®} XC MB (Phenoxyethyl Caprylate) | 0.80 | 0.80 | 0.80 |
| D | Sodium Hydroxide (10% in water) | 0.60 | 0.60 | 0.60 |
| E | Verstatil^{®} PC (Phenoxyethanol, Caprylyl Glycol) | 1.00 | 1.00 | 1.00 |

One mg/cm² emulsion was applied to roughened Polymethylmethacrylate (PMMA) plates (7.0x3.5 cm, 2 µm roughness, Schönberg GmbH & Co. KG) and let dry for 30 min at 30 °C. SPF testing was conducted using a Labsphere UV-2000S Ultraviolet Transmittance Analyzer. UVAPF/ SPF is the ratio between in vitro UVA protection factor and in vitro SPF and is obtained in the experiment. The value is an indication for broadband UV protection and the European Commission recommends since 2006 for all sunscreen products a UVAPF / SPF ≥0.33 (*in vivo*) in order to have sufficient broadness. The absolute *in vitro* UVAPF / SPF does not necessarily match with the absolute *in vivo* value, but *in vitro* testing is typically used for screening purposes and comparison of different film formers, before selection of candidates for time- and cost-intensive *in vivo* SPF testing. Therefore, *in vitro* UVAPF/SPF should be optimized (as close to 0.33 as possible) and should not be negatively influenced by the film former.
Results of *in vitro* SPF testing are summarized in the following table.

| **Formulation** | **A** (example 1) | **B** (example 3) | **C** (comparative example) |
|---|---|---|---|
| UVAPF/SPF | 0.20 | 0.25 | 0.14 |

Surprisingly, it was found that organic polymer with higher polydispersity index also give higher UVAPF/ SPF values in the *in vitro* SPF test.
This experiment shows that organic polymers according to the invention are most compatible in sun care formulations indicated by an optimized UVAPF/SPF value.

### Application example 4: Improved sensory and dry skin feel

Functionalized polymers according to the current invention have been found to have advantages with regard to skin feel. To illustrate the effect, oil-in-water (O/W) sun care emulsions according to the following table were prepared on 200 g scale. Formulation with functionalized polymer not according to the current invention was prepared for reference.

| **Phase** | **Raw material** | **A** | **B** | **C** |
|---|---|---|---|---|
| A | TEGO^{®} Care PBS 6 MB (Polyglyceryl-6 Stearate, Polyglyceryl-6 Behenate) | 3.00 | 3.00 | 3.00 |
| | TEGIN^{®} M Pellets MB (Glyceryl Stearate) | 0.50 | 0.50 | 0.50 |
| | TEGO^{®} Alkanol (Cetearyl Alcohol) | 0.50 | 0.50 | 0.50 |
| | TEGOSOFT^{®} DEC (Diethylhexyl Carbonate) | 3.50 | 3.50 | 3.50 |
| | Bis-Ethylhexyloxyphenol Methoxyphenyl Triazine (Tinosorb S, BASF) | 3.00 | 3.00 | 3.00 |
| | Butyl Methoxydibenzoylmethane | 2.00 | 2.00 | 2.00 |
| | Ethylhexyl Salicylate | 3.00 | 3.00 | 3.00 |
| | Octocrylene | 8.00 | 8.00 | 8.00 |
| | Homosalate | 3.00 | 3.00 | 3.00 |
| | Ethylhexyl Triazone | 1.50 | 1.50 | 1.50 |
| | **Organic polymer (example 1)** | **1.50** | | |
| | **Organic polymer (example 2)** | | **1.50** | |
| | **Organic polymer (comparative example)** | | | **1.50** |
| B | Glycerin | 3.00 | 3.00 | 3.00 |
| | Disodium EDTA | 0.05 | 0.05 | 0.05 |
| | Water | ad 100 | ad 100 | ad 100 |
| C | Xanthan Gum (Keltrol CG-SFT, CP Kelco) | 0.50 | 0.50 | 0.50 |
| D | Verstatil^{®} PC (Phenoxyethanol, Caprylyl Glycol) | 1.00 | 1.00 | 1.00 |

Skin feel of the emulsions was evaluated by sensory panel testing. Fourteen trained panelists applied 20 µL of each formulation on a defined test area of approx. 10 cm² on the volar forearm, not knowing their composition. Formulations were distributed using a finger within the test area by circling movements until complete absorption (or maximum 60 circles). Evaluation of skin feel parameters took place during distribution of the formulation on the skin. In particular, "dry feel" of formulations was evaluated by the skin feel parameters oiliness, absorption and slipperiness.
Dry feel is desirable in functional formulations like sun care emulsions which tend to give oily and slippery residue when containing organic UV filters, and where consumers . Therefore, in such systems, a quick absorption with low remaining oiliness and slipperiness is favored.
People were asked to rank the three sun care formulations from example 1 with respect to skin feel parameters from 0 (attribute not pronounced) to 10 (attribute highly pronounced).
Scores from all panelists were averaged and average ratings were subjected to factor analysis (one-factorial principle components analysis, varimax rotation) to extract the relative "dryness" of the three formulations, which is obtained by normalization of the data on a scale from -1 to +1. In this way, a value of -1 corresponds to the lowest dryness (relatively oily and slippery, low absorption), a value of +1 corresponds to highest dryness (little oily and slippery, good absorption).

| **Formulation** | **A** (example 1) | **B** (example 2) | **C** (comparative example) |
|---|---|---|---|
| Oiliness, average | 4.71 | 4.21 | 5.86 |
| Absorption, average | 4.86 | 6.29 | 4.07 |
| Slipperiness, average | 3.50 | 2.57 | 4.79 |
| Dryness, relative | +0.109 | +1.00 | -0.924 |

Surprisingly, it was found that organic polymers according to the current invention have more pronounced "dryness" than organic polymer not according to the current invention, which makes them ideally suited for sun care applications, among others.

### Application example 5: Protective film against cigarette smoke

Functionalized polymers according to the current invention have been found to have advantages with regard to protection of skin from malodours caused by cigarette smoke. To illustrate the effect, oil-in-water (O/W) body care emulsions according to the following table were prepared on 200 g scale. Formulations with functionalized polymer not according to the current invention were prepared for reference.

| **Phase** | **Raw material** | **A** | **B** | **C** |
|---|---|---|---|---|
| A | dermofeel^{®} NC MB (Polyglyceryl-3 Distearate; Glyceryl Stearate Citrate) | 4.00 | 4.00 | 4.00 |
| | TEGIN^{®} M Pellets MB (Glyceryl Stearate) | 0.50 | 0.50 | 0.50 |
| | Stearyl Alcohol | 0.50 | 0.50 | 0.50 |
| | TEGOSOFT^{®} P (Isopropyl Palmitate) | 12.00 | 12.00 | 12.00 |
| | TEGOSOFT^{®} CT (Caprylic/Capric Triglyceride) | 15.00 | 15.00 | 15.00 |
| | TEGOSOFT^{®} OER MB (Oleyl Erucate) | 5.00 | 5.00 | 5.00 |
| | Prunus Amygdalus Dulcis (Sweet Almond) Oil | 10.00 | 10.00 | 10.00 |
| | **Organic polymer (example 2)** | **3.00** | | |
| | **Organic polymer (example 3)** | | **3.00** | |
| | **Organic polymer (comparative example)** | | | **3.00** |
| B | Water | ad 100 | ad 100 | ad 100 |
| | Glycerin | 3.00 | 3.00 | 3.00 |
| | Xanthan Gum (Keltrol CG-SFT, CP Kelco) | 0.20 | 0.20 | 0.20 |
| C | Sodium Hydroxide (10% in water) | q.s. | q.s. | q.s. |
| Z | Preservative, Perfume | q.s. | q.s. | q.s. |

Protective effect of the emulsions was evaluated by sensory panel testing. For the study nine volunteers were recruited. Each panelist applied one formulation on each volar forearm (first volunteer: formulation 1 and 2, second volunteer: formulation 3 and 1, third volunteer: formulation 2 and 3, and so on), in this way testing each formulation on 6 forearms. Forearms were prepared by washing with SLES solution (12% Sodium Laureth Sulfate in water) for 30 s and letting dry for 5 min. 200 mg of each formulation was applied on a defined test area of approx. 100 cm² on the (entire) volar forearm. A deep fryer (Tristar FR-6935) was filled with 2 l frying oil (Palmin) and adjusted to 170 °C. 750 g Pommes Frites (Mc Cain, 1-2-3-Frites Original, equilibrated at room temperature) were deep fried for 10 min. During the frying process each one volunteer at a time held both their volar forearms into the evaporating vapors from the deep fryer at a defined distance of approx. 50 cm for 30 seconds. Starting after 5 min of the frying process, volunteers were treated subsequently, followed by odor evaluation by three trained, professional sniffers. Olfactory evaluation was performed 5 min after vapor treatment and the degree of rancid/fatty smell on the volar forearm was evaluated on a scale from zero (not detectable) to five (very pronounced). Perceptible differences between right and left forearm were rated with a difference of at least one value on the rating scale. Average rating scores determined by the three experts for each formulation are summarized in the following table:

| **Formulation** | **A** (example 2) | **B** (example 3) | **C** (comparative example) |
|---|---|---|---|
| Odor rating score, average | 2.61 | 3.00 | 2.72 |

Surprisingly, it was found that organic polymers according to the current invention have most pronounced protective properties against adhesion of malodors on skin, which makes them ideally suited for face and body care applications with protective claims, among others.

### Example formulations

The following formulation examples are listing "organic polymer" without further specification. All of the following examples are formulated with organic polymer (example 1), organic polymer (example 2) and organic polymer (example 3) according to the instant examples; thus each formulation is prepared in three different embodiments.

**Sun Care Spray SPF 30**

| Phase | Raw material | w/w-% |
|---|---|---|
| A | TEGO^{®} Care PBS 6 MB (Polyglyceryl-6 Stearate, Polyglyceryl-6 Behenate) | 3.00 |
| | TEGOSOFT^{®} XC MB (Phenoxyethyl Caprylate) | 3.00 |
| | **Organic polymer** | **0.50** |
| | Bis-ethylhexyloxyphenol Methoxyphenyl Triazine (Tinosorb S, BASF) | 3.00 |
| | Butyl Methoxydibenzoylmethane | 2.00 |
| | Homosalate | 4.00 |
| | Ethylhexyl Salicylate | 4.00 |
| | Octocrylene | 4.00 |
| | Diethylhexyl 2,6-Naphthalate | 2.00 |
| B | Water | ad 100 |
| | Gellan Gum (Kelcogel CG-HA, CP Kelco) | 0.03 |
| | EDTA | 0.05 |
| | Glycerin | 3.00 |
| C | Phenylbenzimidazole Sulfonic Acid | 2.00 |
| | Tromethamine | 0.88 |
| | Water | 7.12 |
| D | Acrylates/C10-30 Alkyl Acrylate Crosspolymer | 0.20 |
| | Water | 9.80 |
| E | Tromethamine (Trisaminomethane, 30% in water) | q.s. |
| F | Phenoxyethanol, Ethylhexylglycerin (Euxyl PE 9010, Schülke & Mayr GmbH) | 0.70 |

**Oil Release Sun Care Lotion SPF 50**

| Phase | Raw material | w/w-% |
|---|---|---|
| A | TEGO^{®} Care PBS 6 MB (Polyglyceryl-6 Stearate, Polyglyceryl-6 Behenate) | 3.00 |
| | (iso-/n-)Pentyl Terephthalate | 15.00 |
| | TEGOSOFT^{®} DEC (Diethylhexyl Carbonate) | 10.00 |
| | TEGOSOFT^{®} XC MB (Phenoxyethyl Caprylate) | 10.00 |
| | **Organic polymer** | **1.00** |
| | Diethylamino Hydroxybenzoyl Hexyl Benzoate (Uvinul A plus, BASF) | 10.00 |
| | Ethylhexyl Methoxycinnamate | 10.00 |
| | Bis-Ethylhexyloxyphenol Methoxyphenyl Triazine (Tinosorb S, BASF) | 5.00 |
| | Ethylhexyl Salicylate | 5.00 |
| | Homosalate | 5.00 |
| | TEGO^{®} Feel C 10 (Cellulose) | 1.00 |
| B | Water | ad 100 |
| | Glycerin | 3.00 |
| C | Phenoxyethanol, Ethylhexylglycerin (Euxyl PE 9010, Schülke & Mayr GmbH) | 0.70 |
| D | Citric Acid (10% in water) | q.s. |

**Sun Care Spray SPF 30**

| Phase | Raw material | w/w-% |
|---|---|---|
| A | TEGOSOFT^{®} DEC (Diethylhexyl Carbonate) | 10.00 |
| | TEGOSOFT^{®} XC MB (Phenoxyethyl Caprylate) | 10.00 |
| | TEGOSOFT^{®} TN (C12-15 Alkyl Benzoate) | 8.00 |
| | TEGOSOFT^{®} APM (PPG-3 Myristyl Ether) | 8.00 |
| | **Organic polymer** | **0.50** |
| | TEGO^{®} Xymenynic (Caprylic/Capric Triglyceride; Xymenynic Acid) | 2.00 |
| | Octocrylene | 6.70 |
| | Ethylhexyl Salicylate | 2.50 |
| | Butyl Methoxydibenzoylmethane | 5.00 |
| | Bis-Ethylhexyloxyphenol Methoxyphenyl Triazine (Tinosorb S, BASF SE) | 3.00 |
| | Diethylhexyl Butamido Triazone | 1.30 |
| B | Alcohol | ad 100 |

**Transparent Sun Care Spray SPF 25**

| Phase | Raw material | w/w-% |
|---|---|---|
| A | TEGOSOFT^{®} XC MB (Phenoxyethyl Caprylate) | 12.00 |
| | TEGOSOFT^{®} APM (PPG-3 Myristyl Ether) | 3.00 |
| | TEGOSOFT^{®} GC (PEG-7 Glyceryl Cocoate) | 1.50 |
| | TEGO^{®} Turmerone (Curcuma Longa (Turmeric) Root Extract) | 0.50 |
| | Prunus Amygdalus Dulcis (Sweet Almond) Oil | 2.00 |
| | Dimethicone | 5.00 |
| | Homosalate | 10.00 |
| | Octocrylene | 10.00 |
| | Ethylhexyl Salicylate | 4.50 |
| | Butyl Methoxydibenzoylmethane | 3.00 |
| | **Organic polymer** | **0.25** |
| | Tocopheryl Acetate | 0.50 |
| B | Alcohol Denat. | ad 100 |

**Light O/W Sun Care Lotion SPF 30**

| Phase | Raw material | w/w-% |
|---|---|---|
| A | AXOL^{®} C 62 Pellets MB (Glyceryl Stearate Citrate) | 2.50 |
| | TEGO^{®} Alkanol 1618 (Cetearyl Alcohol) | 1.00 |
| | TEGOSOFT^{®} DEC (Diethylhexyl Carbonate) | 8.00 |
| | **Organic polymer** | **2.00** |
| | Isoadipate (Diisopropyl Adipate) | 1.00 |
| | Butyloctyl Salicylate (HallBrite BHB, The HallStar Company) | 2.00 |
| | Tocopheryl Acetate | 0.20 |
| | Dimethicone (5 mPas) | 1.00 |
| | Butyl Methoxydibenzoylmethane | 1.50 |
| | Diethylamino Hydroxybenzoyl Hexyl Benzoate (Uvinul A Plus, BASF) | 4.00 |
| | Ethylhexyl Triazone | 2.00 |
| | Ethylhexyl Salicylate | 5.00 |
| | Octocrylene | 8.00 |
| | Ethylhexyl Methoxycinnamate | 1.50 |
| B | Titanium Dioxide; Trimethoxycaprylylsilane | 1.00 |
| C | Glycerin | 3.20 |
| | EDTA | 0.02 |
| | Water | ad 100 |
| D | Acrylates/C10-30 Alkyl Acrylate Crosspolymer | 0.10 |
| | TEGOSOFT^{®} DEC (Diethylhexyl Carbonate) | 0.90 |
| E | Sodium Hydroxide (10% in water) | q.s |
| Z | Preservative, Perfume | q.s |

**Dry Touch Hand Moisturizing Cream SPF 15**

| Phase | Raw material | w/w-% |
|---|---|---|
| A | VARISOFT^{®} TA 100 (Distearyldimonium Chloride) | 3.00 |
| | Stearyl Alcohol | 1.00 |
| | TEGIN^{®} M Pellets MB (Glyceryl Stearate) | 1.00 |
| | TEGOSOFT^{®} SH (Stearyl Heptanoate) | 1.00 |
| | TEGOSOFT^{®} XC MB (Phenoxyethyl Caprylate | 5.00 |
| | **Organic polymer** | **2.00** |
| | Diethylamino Hydroxybenzoyl Hexyl Benzoate (Uvinul A plus, BASF) | 3.00 |
| | Ethylhexyl Salicylate | 3.00 |
| | Ethylhexyl Methoxycinnamate | 5.00 |
| | Tocopheryl Acetate | 0.50 |
| | TEGO^{®} Feel C 10 (Cellulose) | 1.00 |
| B | Water | ad 100 |
| | Glycerin | 3.00 |
| C | TEGO^{®} Natural Betaine (Betaine) | 2.00 |
| | Water | 2.00 |
| D | Phenoxyethanol, Ethylhexylglycerin (Euxyl PE 9010, Schülke & Mayr GmbH) | 0.70 |

**Age Defense BB Cream SPF 10**

| Phase | Raw material | w/w-% |
|---|---|---|
| A | TEGIN^{®} 4100 Pellets MB (Glyceryl Stearate) | 1.00 |
| | Stearic Acid | 0.50 |
| | Stearyl Alcohol | 1.00 |
| | TEGOSOFT^{®} DEC (Diethylhexyl Carbonate) | 6.90 |
| | Capryloyl Glycerin/Sebacic Acid Copolymer | 1.50 |
| | **Organic polymer** | **1.50** |
| | HyaCare^{®} Filler CL (Water; Ethylhexyl Stearate; Sodium Hyaluronate Crosspolymer; Polyglyceryl-4 Diisostearate/ Polyhydroxystearate/ Sebacate; Sodium Isostearate) | 2.00 |
| | Phytosphingosine | 0.10 |
| | Ethylhexyl Methoxycinnamate | 5.00 |
| | Diethylamino Hydroxybenzoyl Hexyl Benzoate | 3.00 |
| B | Titanium Dioxide (Hombitan AC 360, Sachtleben) | 3.00 |
| | Talc (Micro Talc IT Extra-AW, Mondo Minerals B.V.) | 2.00 |
| | Unipure Yellow LC 182 | 0.36 |
| | Unipure Red LC 381 | 0.12 |
| | Unipure Black LC 989 | 0.08 |
| | TEGOSOFT^{®} AC MB (Isoamyl Cocoate) | 4.44 |
| | TEGOSOFT^{®} DEC (Diethylhexyl Carbonate) | 4.00 |
| | Polymethyl Methacrylate (Sepimat P, Seppic) | 3.00 |
| C | Water | ad 100 |
| | Glycerin | 3.00 |
| | TEGO^{®} Care CG 90 (Cetearyl Glucoside) | 1.00 |
| | HyaCare^{®} 50 (Hydrolyzed Hyaluronic Acid) | 0.10 |
| | TEGO^{®} Pep 4-17 (Tetrapeptide-21; Glycerin; Butylene Glycol; Water) | 2.00 |
| D | Alcohol | 3.00 |
| E | Microcare MEM (Dipropylene Glycol; Methylparaben; Ethylparaben; Water; Methylisothiazolinone) | 0.80 |

**Moisture Caring BB Cream SPF 15**

| Phase | Raw material | w/w-% |
|---|---|---|
| A | ABIL^{®} EM 180 (Cetyl PEG/PPG-10/1 Dimethicone) | 2.00 |
| | ABIL^{®} Wax 9801 (Cetyl Dimethicone) | 2.00 |
| | Diethylamino Hydroxybenzoyl Hexyl Benzoate; Ethylhexyl Methoxycinnamate | 10.00 |
| | TEGOSOFT^{®} DEC (Diethylhexyl Carbonate) | 2.00 |
| | Dimethicone (and) Trimethylsiloxysilicate | 3.00 |
| | HyaCare^{®} Filler CL (Water; Ethylhexyl Stearate; Sodium Hyaluronate Crosspolymer; Polyglyceryl-4 Diisostearate/Polyhydroxystearate/ Sebacate; Sodium Isostearate) | 2.00 |
| | Phytosphingosine (Phytosphingosine) | 0.10 |
| | Hydrogenated Castor Oil | 0.25 |
| | Microcrystalline Wax | 0.25 |
| | **Organic polymer** | **0.50** |
| B | Talc (Micro Talc IT Extra-AW, Mondo Minerals B.V.) | 2.00 |
| | Titanium Dioxide (Hombitan AC 360, Sachtleben) | 4.00 |
| | Unipure Yellow LC 182 | 0.36 |
| | Unipure Red LC 381 | 0.12 |
| | Unipure Black LC 989 | 0.08 |
| | AEROSIL R 972 (Silica Dimethylsilylate) | 0.50 |
| | Nylon-12 | 2.00 |
| | TEGOSOFT^{®} OS (Ethylhexyl Stearate) | 5.00 |
| | TEGOSOFT^{®} DEC (Diethylhexyl Carbonate) | 6.00 |
| C | Water | ad 100 |
| | HyaCare^{®} (Sodium Hyaluronate) | 0.05 |
| | Glycerin | 5.00 |
| | Sodium Chloride | 0.80 |
| D | Phenoxyethanol; Ethylhexylglycerin (EUXYL PE 9010, Schülke & Mayr) | 0.70 |

**Anhydrous stick SPF 10**

| Phase | Raw material | w/w-% |
|---|---|---|
| A | dermofeel^{®} viscolid MB (Hydrogenated Vegetable Oil) | 10.00 |
| | **Organic polymer** | **10.00** |
| | Di(iso-)pentyl Terephthalate | 30.00 |
| | TEGOSOFT^{®} P (Isopropyl Palmitate) | 15.00 |
| | Ethylhexyl Methoxycinnamate | 7.50 |
| | Octyldodecanol | ad 100 |

**O/W Sun Protect & Bronze SPF 20**

| Phase | Raw material | w/w-% |
|---|---|---|
| A | AXOL^{®} C 62 Pellets MB (Glyceryl Stearate Citrate) | 2.00 |
| | TEGO^{®} Alkanol 1618 (Cetearyl Alcohol) | 1.50 |
| | TEGOSOFT^{®} XC MB (Phenoxyethyl Caprylate) | 8.00 |
| | TEGOSOFT^{®} TN (C12-15 Alkyl Benzoate) | 4.00 |
| | **Organic polymer** | **1.00** |
| | Titanium Dioxide, Trimethoxycaprylylsilane | 1.50 |
| | Dimethicone (5 cSt) | 3.00 |
| | Octocrylene | 9.00 |
| | Ethylhexyl Salicylate | 4.50 |
| | Butyl Methoxydibenzoylmethane | 2.00 |
| | Tocopheryl Acetate | 0.50 |
| | Xanthan Gum | 0.50 |
| B | Water | ad 100 |
| | Glycerin | 3.00 |
| | Panthenol | 1.00 |
| C | Acrylates/C10-30 Alkyl Acrylate Crosspolymer | 0.10 |
| | TEGOSOFT^{®} XC MB (Phenoxyethyl Caprylate) | 0.40 |
| D | Sodium Hydroxide (10% in water) | q.s. |
| E | Butylene Glycol; Acetyl-L-Tyrosine; Hydrolyzed Vegetable Protein; Adenosin Triphosphate; Riboflavin (Unipertan VEG-2001) | 0.80 |
| Z | Preservative, Perfume | q.s. |

**Sun Care Foam SPF 50**

| Phase | Raw material | w/w-% |
|---|---|---|
| A | TEGO^{®} Care PBS 6 MB (Polyglyceryl-6 Stearate (and) Polyglyceryl-6 Behenate) | 3.00 |
| | TEGOSOFT^{®} TN (C12-15 Alkyl Benzoate) | 5.00 |
| | **Organic polymer** | **0.50** |
| | Bis-Ethylhexyloxyphenol Methoxyphenyl Triazine | 4.50 |
| | Butyl Methoxydibenzoylmethane | 3.00 |
| | Octocrylene | 8.00 |
| | Homomenthyl Salicylate | 6.00 |
| | Ethylhexyl Salicylate | 2.50 |
| | TEGO^{®} Feel C 10 (Cellulose) | 2.00 |
| B | Water | ad 100 |
| | Glycerin | 2.00 |
| | EDTA Disodium | 0.05 |
| C | TEGOSOFT^{®} TN (C12-15 Alkyl Benzoate) | 0.80 |
| | Carbo mer | 0.20 |
| | Xanthan Gum (Keltrol CG-SFT, CP Kelco) | 0.20 |
| D | Water | 11.68 |
| | Phenylbenzimidazole Sulfonic Acid | 3.00 |
| | Tromethamine | 1.32 |
| E | Phenoxyethanol, Ethylhexylglycerin (Euxyl PE 9010, Schülke & Mayr GmbH) | 0.70 |
| | TEGO^{®} Betain 810 (Capryl/Capramidopropyl Betaine) | 1.00 |
| | REWOTERIC^{®} AM C (Sodium Cocoamphoacetate) | 1.00 |
| F | Tromethamine (30% in water) | q.s. |

**W/O Sun Protection Shake-Shake SPF 20**

| Phase | Raw material | w/w-% |
|---|---|---|
| A | ABIL^{®} EM 90 (Cetyl PEG/PPG-10/1 Dimethicone) | 1.00 |
| | TEGOSOFT^{®} XC MB (Phenoxyethyl Caprylate) | 11.00 |
| | TEGOSOFT^{®} DEC (Diethylhexyl Carbonate) | 2.50 |
| | Dimethicone (5 cSt) | 12.00 |
| | Octocrylene | 6.00 |
| | Ethylhexyl Salicylate | 2.00 |
| | Butyl Methoxydibenzoylmethane | 0.80 |
| | Bis-Ethylhexyloxyphenol Methoxyphenyl Triazine (Tinosorb S, BASF SE) | 1.50 |
| | Titanium Dioxide, Trimethoxycaprylylsilane | 2.00 |
| | **Organic polymer** | **0.50** |
| B | Water | 4.43 |
| | Phenylbenzimidazole Sulfonic Acid (Eusolex 232, Merck KGaA) | 0.50 |
| | Sodium Hydroxide | 0.07 |
| C | Distarch Phosphate (MAIS PO4 PH "B", Agrana Stärke GmbH) | 1.50 |
| | Alcohol | 1.00 |
| | Glycerin | 6.00 |
| | Water | ad 100 |
| | Preservative, Perfume | q.s. |

**Light sun care W/O shake-shake SPF 20**

| Phase | Raw material | w/w-% |
|---|---|---|
| A | ABIL^{®} EM 90 (Cetyl PEG/PPG-10/1 Dimethicone) | 1.50 |
| | TEGOSOFT ^{®} DEC (Diethylhexyl Carbonate) | 5.00 |
| | Dimethicone (2 cSt) | 5.00 |
| | Cyclopentasiloxane | 15.00 |
| | TEGOSOFT^{®} XC MB (Phenoxyethyl Caprylate) | 5.00 |
| | C12-15 Alkyl Benzoate;Titanium Dioxide;PEG-30 Dipolyhydroxystearate; Silica; Dimethicone(T-lique AB50Si, UNI-POWDER) | 2.40 |
| | Zinc Oxide(ZnO-NAS, SUNJIN) | 8.00 |
| | ABIL^{®} Wax 9801 (Cetyl Dimethicone) | 2.00 |
| | Talc | 2.00 |
| | Polymethylsilsesquioxane (Gransil PSQ, Grant) | 4.00 |
| | Vinyl Dimethicone/Methcone Silsesquioxane Crosspolymer (KSP-100, ShinEtsu) | 1.00 |
| | **Organic polymer** | **1.00** |
| | Diethylamino Hydroxybenzoyl Hexyl Benzoate | 2.00 |
| | Ethylhexyl Methoxycinnamate | 8.00 |
| | Ethylhexyl Salicylate | 4.00 |
| | Bis-Ethylhexyloxyphenol Methoxyphenyl Triazine (Escalol S, Ashland) | 0.50 |
| B | Water | ad 100 |
| | Glycerin | 3.00 |
| | Sodium Chloride | 1.00 |
| C | Phenoxyethanol, Ethylhexylglycerin (Euxyl PE 9010, Schülke & Mayr GmbH) | 0.70 |

**W/O Organic shake-shake SPF30 PA+++**

| Phase | Raw material | w/w-% |
|---|---|---|
| A | ABIL^{®} EM 90 (Cetyl PEG/PPG-10/1 Dimethicone) | 1.50 |
| | TEGOSOFT ^{®} DEC (Diethylhexyl Carbonate) | 7.00 |
| | Dimethicone (5 cSt) | 5.00 |
| | Cyclopentasiloxane | 5.00 |
| | TEGOSOFT^{®} TN (C12-15 Alkyl Benzoate) | 3.00 |
| | **Organic polymer** | **1.00** |
| | C12-15 Alkyl Benzoate;Titanium Dioxide;PEG-30 Dipolyhydroxystearate; Silica; Dimethicone(T-lique AB50Si, UNI-POWDER) | 15.60 |
| | ABIL^{®} Wax 9801 (Cetyl Dimethicone) | 2.00 |
| | Bis-Ethylhexyloxyphenol Methoxyphenyl Triazine (Escalol S, Ashland) | 1.00 |
| | Diethylamino Hydroxybenzoyl Hexyl Benzoate (Uvinul A plus Granular, BASF) | 1.50 |
| | Octocrylene | 2.00 |
| | Ethylhexyl Methoxycinnamate | 7.00 |
| | Ethylhexyl Salicylate | 4.00 |
| | Zinc Oxide (ZnO-NAS, SUNJIN) | 14.40 |
| B | Water | ad 100 |
| | Butylene Glycol | 3.00 |
| | Sodium Chloride | 1.50 |
| C | Phenoxyethanol, Ethylhexylglycerin (Euxyl PE 9010, Schülke & Mayr GmbH) | 0.70 |

**Summer Paradise Cream SPF 30**

| Phase | Raw material | w/w-% |
|---|---|---|
| A | TEGO^{®} Care PBS 6 MB (Polyglyceryl-6 Stearate, Polyglyceryl-6 Behenate) | 3.00 |
| | TEGIN^{®} M Pellets MB (Glyceryl Stearate) | 0.50 |
| | TEGO^{®} Alkanol 1618 (Cetearyl Alcohol) | 0.50 |
| | TEGOSOFT^{®} DEC (Diethylhexyl Carbonate) | 4.50 |
| | Bis-Ethylhexyloxyphenol Methoxyphenyl Triazine (Tinosorb S, BASF) | 3.00 |
| | Butyl Methoxydibenzoylmethane | 2.00 |
| | Ethylhexyl Salicylate | 3.00 |
| | Octocrylene | 8.00 |
| | Homosalate | 3.00 |
| | Ethylhexyl Triazone | 1.50 |
| | **Organic polymer** | **1.50** |
| B | Water | ad 100 |
| | Glycerin | 3.00 |
| | EDTA | 0.05 |
| | TEGO^{®} Feel C 10 (Cellulose) | 2.00 |
| C | Acrylates/C10-30 Alkyl Acrylate Crosspolymer | 0.20 |
| | TEGOSOFT^{®} DEC (Diethylhexyl Carbonate) | 0.80 |
| D | Sodium Hydroxide (10% in water) | q.s. |
| E | Verstatil^{®} PC (Phenoxyethanol, Caprylyl Glycol) | 1.00 |

**On the go UV protection stick SPF 50**

| Phase | Raw material | w/w-% |
|---|---|---|
| A | TEGOSOFT^{®} XC MB (Phenoxyethyl Caprylate) | 8.00 |
| | TEGOSOFT^{®} CT (Caprylic/Capric Triglyceride) | 7.50 |
| | TEGOSOFT^{®} DEC (Diethylhexyl Carbonate) | 8.60 |
| | Titanium Dioxide, Silica, Dimethicone (Parsol TX, DSM) | 2.50 |
| B | TEGOSOFT^{®} CR MB (Cetyl Ricinoleate) | 3.00 |
| | TEGOSOFT^{®} MM MB (Myristyl Myristate) | 5.00 |
| | Diethylamino Hydroxybenzoyl Hexyl Benzoate | 8.00 |
| | Ethylhexyl Salicylate | 5.00 |
| | Ethylhexyl Methoxycinnamate | 10.00 |
| | Homosalate | 5.00 |
| | Bis-Ethylhexyloxyphenol Methoxyphenyl Triazine (Tinosorb S, BASF) | 4.00 |
| | Beeswax | 4.00 |
| | Polyglyceryl-3 Beeswax (Cera Bellina, Koster Keunen) | 6.00 |
| | Ozokerite (1899, KahlWax) | 3.50 |
| | Copernicia Cerifera (Carnauba) Wax (2442L, KahlWax) | 2.50 |
| | dermofeel^{®} Ascorbyl Palmitate (Ascorbyl Palmitate) | 0.10 |
| | dermofeel^{®} Toco 70 non GMO (Tocopherol, Helianthus Annuus (Sunflower) Seed Oil) | 0.20 |
| | **Organic polymer** | **5.00** |
| C | AEROSIL^{®} 200 (Silica) | 2.00 |
| D | TEGO^{®} Feel C 10 (Cellulose) | 10.00 |
| Z | Perfume | q.s. |

**Transparent UV protection water spray SPF 30**

| Phase | Raw material | w/w-% |
|---|---|---|
| A | TEGOSOFT^{®} DEC (Diethylhexyl Carbonate) | 15.00 |
| | Isododecane | 7.50 |
| | TEGOSOFT^{®} XC MB (Phenoxyethyl Caprylate) | 5.00 |
| | dermofeel^{®} sensolv MB (Isoamyl Laurate) | 5.00 |
| | Butyl Methoxydibenzoylmethane | 5.00 |
| | Bis-Ethylhexyloxyphenol Methoxyphenyl Triazine (Tinosorb S, BASF) | 2.40 |
| | Homosalate | 2.00 |
| | Ethylhexyl Salicylate | 2.00 |
| | Ethylhexyl Triazone | 1.70 |
| | dermofeel^{®} Toco 70 non GMO (Tocopherol, Helianthus Annuus (Sunflower) Seed Oil) | 0.50 |
| | **Organic polymer** | **0.35** |
| B | Verstatil^{®} PC (Phenoxyethanol, Caprylyl Glycol) | 1.00 |
| | Perfume | q.s. |
| C | Water | ad 100 |
| | Glycerin | 3.00 |
| | Disodium EDTA | 0.10 |
| D | Water | 9.65 |
| | Phenylbenzimidazole Sulfonic Acid | 2.50 |
| | Sodium Hydroxide | 0.35 |
| E | Triethanolamine | q.s. |

**Sun care cream SPF 25**

| Phase | Raw material | w/w-% |
|---|---|---|
| A | TEGO^{®} Care PBS 6 MB (Polyglyceryl-6 Stearate, Polyglyceryl-6 Behenate) | 3.00 |
| | TEGIN^{®} M Pellets MB (Glyceryl Stearate) | 0.50 |
| | TEGO^{®} Alkanol 1618 (Cetearyl Alcohol) | 0.50 |
| | TEGOSOFT^{®} XC MB (Phenoxyethyl Caprylate) | 3.50 |
| | Butyl Methoxydibenzoylmethane | 3.00 |
| | Ethylhexyl Salicylate | 5.00 |
| | Octocrylene | 10.0 |
| | Homosalate | 10.0 |
| | **Organic polymer** | **1.50** |
| B | Water | ad 100 |
| | Glycerin | 3.00 |
| | EDTA | 0.05 |
| C | Acrylates/C10-30 Alkyl Acrylate Crosspolymer | 0.20 |
| | TEGOSOFT^{®} XC MB (Phenoxyethyl Caprylate) | 0.80 |
| D | Sodium Hydroxide (10% in water) | 0.60 |
| E | Verstatil^{®} PC (Phenoxyethanol, Caprylyl Glycol) | 1.00 |

**Inorganic water resistant O/W sunscreen SPF 20**

| Phase | Raw material | w/w-% |
|---|---|---|
| A | TEGO^{®} Care PBS 6 MB (Polyglyceryl-6 Stearate; Polyglyceryl-6 Behenate) | 4.00 |
| | **Organic polymer** | **1.50** |
| | TEGIN^{®} M Pellets MB (Glyceryl Stearate) | 0.20 |
| | TEGO^{®} Alkanol 1618 (Cetearyl Alcohol) | 0.20 |
| B | Zinc Oxide; Triethoxycaprylylsilane (Z-Cote HP-1, BASF) | 7.80 |
| | Titanium Dioxide, Silica, Dimethicone (Parsol TX, DSM) | 7.20 |
| | TEGOSOFT^{®} XC MB (Phenoxyethyl Caprylate) | 3.00 |
| | dermofeel^{®} sensolv MB (Isoamyl Laurate) | 3.00 |
| | TEGOSOFT^{®} CT (Caprylic/Capric Triglyceride) | 5.00 |
| | TEGOSOFT^{®} DEC (Diethylhexyl Carbonate) | 5.00 |
| | ABIL^{®} 350 (Dimethicone) | 3.00 |
| | ABIL^{®} Wax 9840 (Cetyl Dimethicone) | 2.00 |
| | dermosoft^{®} Octiol (Caprylyl Glycol) | 0.50 |
| C | Water | ad 100 |
| | Glycerin | 3.00 |
| | Xanthan Gum | 0.50 |
| D | dermosoft^{®} Pentiol eco (Pentylene Glycol) | 3.00 |
| E | Citric acid (50% in water) | 0.45 |

**Feel the sun spray SPF 50**

| Phase | Raw material | w/w-% |
|---|---|---|
| A | TEGO^{®} Care PBS 6 MB (Polyglyceryl-6 Stearate, Polyglyceryl-6 Behenate) | 4.00 |
| | TEGIN^{®} M Pellets MB (Glyceryl Stearate) | 0.25 |
| | TEGO^{®} Alkanol 1618 (Cetearyl Alcohol) | 0.25 |
| | dermofeel^{®} sensolv MB (Isoamyl Laurate) | 4.00 |
| | TEGOSOFT^{®} DEC (Diethylhexyl Carbonate) | 4.00 |
| | Bis-Ethylhexyloxyphenol Methoxyphenyl Triazine (Tinosorb S, BASF) | 6.00 |
| | Diethylamino Hydroxybenzoyl Hexyl Benzoate | 6.00 |
| | Ethylhexyl Salicylate | 5.00 |
| | Ethylhexyl Triazone | 2.00 |
| | **Organic polymer** | **1.00** |
| | dermofeel^{®} Toco 70 non GMO (Tocopherol, Helianthus Annuus (Sunflower) Seed Oil) | 0.20 |
| B | Water | ad 100 |
| | Glycerin | 3.00 |
| | EDTA | 0.05 |
| C | Xanthan Gum (Keltrol CG-SFT, CP Kelco) | 0.50 |
| D | Phenylbenzimidazole Sulfonic Acid | 3.00 |
| | Tromethamine (Trisaminomethane) | 1.32 |
| | Water | 10.68 |
| E | Verstatil^{®} BOB (Benzyl Alcohol; Caprylyl Glycol; Benzoic Acid) | 1.20 |
| | Perfume | 0.10 |

**Sun Protection Stick**

| Phase | Raw material | w/w-% |
|---|---|---|
| A | Carthamus Tinctorius (Safflower) Seed Oil | 22.80 |
| | Butyrospermum Parkii (Shea) Butter | 7.00 |
| | Hippophae Rhamnoides Fruit Oil | 1.00 |
| | dermofeel^{®} sensolv MB (Isoamyl Laurate) | 10.00 |
| | dermofeel^{®} viscolid MB (Hydrogenated Vegetable Oil) | 10.00 |
| | TEGOSOFT^{®} DC MB (Decyl Cocoate) | 6.00 |
| | TEGOSOFT^{®} OER MB (Oleyl Erucate) | 6.00 |
| | **Organic polymer** | **2.00** |
| | Cera Alba (Beeswax 8104, KahlWax) | 4.00 |
| | Helianthus Annuus Seed Cera, Ascorbyl Palmitate, Tocopherol (Sunflower Seed Wax 6607L, KahlWax) | 2.50 |
| | Euphorbia Cerifera Cera (Candelilla Wax 2039L, KahlWax) | 2.50 |
| | dermofeel^{®} TocoBalance (Tocopherol, Helianthus Annuus (Sunflower) Seed Oil) | 1.50 |
| | dermosoft^{®} GMCY MB (Glyceryl Caprylate) | 1.00 |
| B | Distarch Phosphate (Corn P04 PH "B", Agrana) | 1.00 |
| | TEGO^{®} Feel C 10 (Cellulose) | 2.00 |
| | Zinc Oxide (Zano 10, EverZinc) | 20.00 |
| C | Perfume | 0.70 |

**W/O Quick-Breaking Cream SPF 15**

| Phase | Raw material | w/w-% |
|---|---|---|
| A | ABIL^{®} EM 180 (Cetyl PEG/PPG-10/1 Dimethicone) | 0.80 |
| | TEGOSOFT^{®} DEC (Diethylhexyl Carbonate) | 3.00 |
| | TEGOSOFT^{®} XC MB (Phenoxyethyl Caprylate) | 2.00 |
| | Dimethicone (5 mPas) | 3.00 |
| | **Organic polymer** | **1.00** |
| | Bis-ethylhexyloxyphenol Methoxyphenyl Triazine (Tinosorb S, BASF) | 2.00 |
| | Diethylamino Hydroxybenzoyl Hexyl Benzoate | 2.00 |
| | 4-Methylbenzylidene Camphor | 4.00 |
| | Ethylhexyl Salicylate | 2.00 |
| | Verstatil^{®} BOB (Benzyl Alcohol, Caprylyl Glycol, Benzoic Acid) | 1.00 |
| B | Water | ad 100 |
| | Propylene Glycol | 5.00 |
| | Sodium Chloride | 1.00 |

**Fun in the Sun SPF 30 Spray**

| Phase | Raw material | w/w-% |
|---|---|---|
| A | TEGO^{®} Care PBS 6 MB (Polyglyceryl-6 Stearate, Polyglyceryl-6 Behenate) | 3.00 |
| | TEGOSOFT^{®} XC MB (Phenoxyethyl Caprylate) | 3.00 |
| | Bis-ethylhexyloxyphenol Methoxyphenyl Triazine (Tinosorb S, BASF) | 3.00 |
| | Butyl Methoxydibenzoylmethane | 2.00 |
| | Homosalate | 4.00 |
| | Ethylhexyl Salicylate | 4.00 |
| | Octocrylene | 4.00 |
| | TEGO^{®} Feel C 10 (Cellulose) | 1.00 |
| | **Organic polymer** | **1.00** |
| B | Water | ad 100 |
| | Gellan Gum (Kelcogel CG-HA, CP Kelco) | 0.03 |
| | EDTA | 0.05 |
| | Glycerin | 3.00 |
| | Acrylates/C10-30 Alkyl Acrylate Crosspolymer | 0.20 |
| C | Phenylbenzimidazole Sulfonic Acid | 2.00 |
| | Tromethamine | 0.88 |
| | Water | 7.12 |
| E | Tromethamine (Trisaminomethane, 30% in water) | q.s. |
| F | dermofeel^{®} OMP (Methylpropanediol, Caprylyl Glycol, Phenylpropanol) | 3.00 |

**Cationic Sun Screen SPF 10**

| Phase | Raw material | w/w-% |
|---|---|---|
| A | VARISOFT^{®} TA 100 (Distearyldimonium Chloride) | 3.50 |
| | TEGIN^{®} M Pellets MB (Glyceryl Stearate) | 1.50 |
| | Stearyl Alcohol | 1.00 |
| | TEGOSOFT^{®} XC MB (Phenoxyethyl Caprylate) | 5.00 |
| | TEGOSOFT^{®} DEC (Diethylhexyl Carbonate) | 3.00 |
| | TEGOSOFT^{®} CR MB (Cetyl Ricinoleate) | 1.00 |
| | Triisostearin | 1.00 |
| | Ethylhexyl Methoxycinnamate | 5.00 |
| | Ethylhexyl Salicylate | 4.00 |
| | Menthyl Anthranilate | 4.00 |
| | **Organic polymer** | **1.50** |
| B | TEGO^{®} Cosmo C 100 (Creatine) | 0.50 |
| | Glycerin | 3.00 |
| | Water | ad 100 |
| Z | Preservative, Parfum | q. s. |

**W/O Sun Care Lotion SPF 8, Water Resistant**

| Phase | Raw material | w/w-% |
|---|---|---|
| A | ISOLAN^{®} GPS (Polyglyceryl-4 Diisostearate / Polyhydroxystearate / Sebacate) | 3.00 |
| | Hydrogenated Castor Oil | 0.20 |
| | Microcrystalline Wax | 0.30 |
| | TEGOSOFT^{®} XC MB (Phenoxyethyl Caprylate) | 5.00 |
| | TEGOSOFT^{®} DEC (Diethylhexyl Carbonate) | 3.00 |
| | TEGOSOFT^{®} CR MB (Cetyl Ricinoleate) | 1.00 |
| | Triisostearin | 1.00 |
| | Ethylhexyl Methoxycinnamate | 5.00 |
| | Ethylhexyl Salicylate | 4.00 |
| | Menthyl Anthranilate | 4.00 |
| | **Organic polymer** | **1.00** |
| B | TEGO^{®} Cosmo C 100 (Creatin) | 0.50 |
| | Glycerin | 3.00 |
| | Magnesium Sulfate Heptahydrate | 1.50 |
| | Water | ad 100 |
| Z | Preservative, Parfum | q. s. |

**Cationic Sun Screen SPF 20, Water Resistant**

| Phase | Raw material | w/w-% |
|---|---|---|
| A | VARISOFT^{®} TA 100 (Distearyldimonium Chloride) | 3.50 |
| | TEGIN^{®} M Pellets MB (Glyceryl Stearate) | 2.00 |
| | TEGO^{®} Alkanol 18 (Stearyl Alcohol) | 1.00 |
| | TEGOSOFT^{®} XC MB (Phenoxyethyl Caprylate) | 5.00 |
| | TEGOSOFT^{®} DEC (Diethylhexyl Carbonate) | 3.50 |
| | TEGOSOFT^{®} CR MB (Cetyl Ricinoleate) | 1.00 |
| | Triisostearin | 1.00 |
| | **Organic polymer** | **2.00** |
| | Titanium Dioxide, Diethylhexyl Carbonate, Polyglyceryl-6 Polyhyd roxystearate | 5.00 |
| | 4-Methylbenzylidene Camphor | 4.00 |
| | Octocrylene | 3.00 |
| | Butyl Methoxydibenzoylmethane | 2.00 |
| B | Glycerin | 3.00 |
| | Water | ad 100 |
| Z | Preservative, Parfum | q. s. |

**Cationic Sun Screen SPF 15, Water Resistant**

| Phase | Raw material | w/w-% |
|---|---|---|
| A | VARISOFT^{®} TA 100 (Distearyldimonium Chloride) | 3.50 |
| | TEGIN^{®} M Pellets MB (Glyceryl Stearate) | 1.50 |
| | TEGO^{®} Alkanol 18 (Stearyl Alcohol) | 1.00 |
| | Di(iso-)pentyl Terephthalate | 8.00 |
| | TEGOSOFT^{®} DEC (Diethylhexyl Carbonate) | 5.00 |
| | TEGOSOFT^{®} CR MB (Cetyl Ricinoleate) | 1.00 |
| | Triisostearin | 1.00 |
| | Ethylhexyl Methoxycinnamate | 5.00 |
| | Bis-Ethylhexyloxyphenol Methoxyphenyl Triazine | 3.00 |
| | **Organic polymer** | **1.00** |
| B | TEGO^{®} Cosmo C 100 (Creatine) | 0.50 |
| | Glycerin | 3.00 |
| | Water | ad 100 |
| Z | Preservative, Parfum | q. s. |

**Cationic Sun Care Cream SPF 25**

| Phase | Raw material | w/w-% |
|---|---|---|
| A | VARISOFT^{®} PATC (Palmitamidopropyltrimonium Chloride) | 1.20 |
| | TEGIN^{®} M Pellets MB (Glyceryl Stearate) | 1.00 |
| | TEGO^{®} Alkanol 1618 (Cetearyl Alcohol) | 2.80 |
| | TEGOSOFT^{®} XC MB (Phenoxyethyl Caprylate) | 2.60 |
| | TEGOSOFT^{®} DEC (Diethylhexyl Carbonate) | 3.00 |
| | Titanium Dioxide, Diethylhexyl Carbonate, Polyglyceryl-6 Polyhyd roxystearate | 4.40 |
| | Octocrylene | 5.00 |
| | Ethylhexyl Methoxycinnamate | 5.00 |
| | Ethylhexyl Salicylate | 3.00 |
| | Butyl Methoxydibenzoylmethane | 2.00 |
| | **Organic polymer** | **1.50** |
| B | Glycerin | 3.00 |
| | Water | ad 100 |
| Z | Preservative, Parfum | q. s. |

**Everyday Sunshine Cream SPF 15**

| Phase | Raw material | w/w-% |
|---|---|---|
| A | TEGO^{®} Care 165 (Glyceryl Stearate; PEG-100 Stearate) | 3.00 |
| | Stearyl Alcohol | 2.00 |
| | TEGOSOFT^{®} DEC (Diethylhexyl Carbonate) | 2.00 |
| | Propylene Glycol Dibenzoate | 2.00 |
| | TEGOSOFT^{®} CT (Caprylic/Capric Triglyceride) | 2.00 |
| | **Organic polymer** | **2.00** |
| | Titanium Dioxide; Trimethoxycaprylylsilane | 1.00 |
| | Paraffinum Liquidum | 2.00 |
| | Butyrospermum Parkii (Shea Butter) | 1.00 |
| | Octocrylene | 2.00 |
| | Butyl Methoxydibenzoylmethane | 2.00 |
| | Ethylhexyl Salicylate | 5.00 |
| | Tocopheryl Acetate | 0.80 |
| B | Water | ad 100 |
| | Glycerin | 3.00 |
| | Graham's salt (Sodium Hexametaphosphate) | 0.20 |
| | TEGO^{®} Cosmo C 100 (Creatine) | 0.50 |
| | HyaCare^{®} 50 (Hydrolyzed Hyaluronic Acid) | 0.10 |
| | Polyacrylamide; C13-14 Isoparaffin; Laureth-7 (Sepigel 305, Seppic) | 2.00 |
| D | Water | 13.29 |
| | Phenylbenzimidazole Sulfonic Acid (Eusolex 232, Merck KGaA) | 1.05 |
| | Sodium Hydroxide | 0.21 |
| Z | Preservative, perfume | q.s. |

**High Sun Protection Lotion O/W SPF 50**

| Phase | Raw material | w/w-% |
|---|---|---|
| A | ABIL^{®} Wax 9840 (Cetyl Dimethicone) | 0.50 |
| | TEGOSOFT^{®} XC MB (Phenoxyethyl Caprylate) | 5.00 |
| | REWOPAL^{®} PIB 1000 (Polyisobutene) | 0.50 |
| | Acrylates/C10-30 Alkyl Acrylate Crosspolymer | 0.20 |
| | Xanthan Gum | 0.20 |
| | Titanium Dioxide; Trimethoxycaprylylsilane | 1.50 |
| | Bis-Ethylhexyloxyphenol Methoxyphenyl Triazine (Tinosorb S, BASF SE) | 4.00 |
| | Octocrylene | 10.00 |
| | Butyl Methoxydibenzoylmethane | 4.00 |
| | **Organic polymer** | **2.00** |
| B | TEGO^{®} Care CG 90 (Cetearyl Glucoside) | 1.00 |
| | Glycerin | 4.00 |
| | Water | ad 100 |
| C | Alcohol | 5.00 |
| | Phenoxyethanol, Methylparaben, Propylparaben, Ethylparaben (Phenonip XB, Clariant) | 1.00 |
| D | Methylene Bis-Benzotriazolyl Tetramethylbutylphenol (Tinosorb M, BASF SE) | 8.00 |
| E | Sodium Hydroxide (10% in water) | q.s. |

**Icy O/W Sun Care Lotion SPF 25**

| Phase | Raw material | w/w-% |
|---|---|---|
| A | TEGO^{®} Care PS MB (Methyl Glucose Sesquistearate) | 2.00 |
| | TEGO^{®} Alkanol 18 (Stearyl Alcohol) | 1.00 |
| | TEGOSOFT^{®} XC (Phenoxyethyl Caprylate) | 5.00 |
| | TEGOSOFT^{®} SH (Stearyl Heptanoate) | 3.00 |
| | **Organic polymer** | **1.00** |
| | TEGO^{®} Xymenynic (Caprylic/Capric Triglyceride, Xymenynic Acid) | 1.00 |
| | Diethylamino Hydroxybenzoyl Hexyl Benzoate | 6.00 |
| | 4-Methylbenzylidene Camphor | 4.00 |
| | Diethylhexyl Butamido Triazone | 3.00 |
| | Xanthan Gum | 0.50 |
| B | Water | ad 100 |
| | Glycerin | 3.00 |
| C | Carbo mer | 0.10 |
| | TEGOSOFT^{®} XC (Phenoxyethyl Caprylate) | 0.40 |
| D | Sodium Hydroxide (10 % in water) | q.s. |
| E | Dipropylene Glycol; Methylparaben; Ethylparaben; Water; Methylisothiazolinone (Microcare MEM, Thor) | 0.80 |
| Z | Perfume | q. s. |

**Low viscosity W/O suncare lotion SPF25 PA+++**

| Phase | Raw material | w/w-% |
|---|---|---|
| A | ABIL^{®} EM 90 (Cetyl PEG/PPG-10/1 Dimethicone) | 2.50 |
| | TEGOSOFT^{®} DEC (Diethylhexyl Carbonate) | 2.00 |
| | TEGOSOFT^{®} XC (Phenoxyethyl Caprylate) | 2.00 |
| | Dimethicone (DC200, 5cst, Dow Corning) | 16.00 |
| | **Organic polymer** | **0.50** |
| | Titanium Dioxide (Parsol TX, DSM) | 10.00 |
| | Zinc Oxide (SUNCLEAR-Z60CO, SUNJIN) | 25.00 |
| | Dimethicone/Vinyl Dimethicone Crosspolymer and Silica (DC 9701, DowCorning) | 1.00 |
| B | Water | ad 100 |
| | Butylene Glycol | 5.00 |
| | Sodium Chloride | 1.50 |
| C | Phenoxyethanol, Ethylhexylglycerin (Euxyl PE 9010, Schülke & Mayr GmbH) | 0.70 |

**O/W Sun Care Gel SPF30 PA+++**

| Phase | Raw material | w/w-% |
|---|---|---|
| A | ABIL^{®} Care XL 80 MB (Bis-PEG/PPG-20/5 PEG/PPG-20/5 Dimethicone; Methoxy PEG/PPG-25/4 Dimethicone; Caprylic/Capric Triglyceride) | 2.00 |
| | TEGOSOFT^{®} DEC (Diethylhexyl Carbonate) | 4.00 |
| | Dimethicone (2 cSt) | 3.00 |
| | TEGOSOFT^{®} TN (C12-15 Alkyl Benzoate) | 2.00 |
| | ABIL^{®} Wax 9801 (Cetyl Dimethicone) | 2.00 |
| | **Organic polymer** | **1.50** |
| | Bis-ethylhexyloxyphenol methoxyphenyl triazine (Tinosorb S,BASF) | 3.00 |
| | Diethylamino Hydroxybenzoyl Hexyl Benzoate (Uvinul A plus Granular, BASF) | 4.00 |
| | Octocrylene | 2.00 |
| | Ethylhexyl Methoxycinnamate | 8.00 |
| B | Water | ad 100 |
| | Butylene Glycol | 5.00 |
| | Xanthan Gum | 0.20 |
| C | Sodium Acrylate/Sodium Acryloyldimethyl Taurate Copolymer (and) Isohexadecane (and) Polysorbate-80 (Simulgel EG, Seppic) | 2.00 |
| D | Phenoxyethanol, Ethylhexylglycerin (Euxyl PE 9010, Schülke & Mayr GmbH) | 0.70 |

**Sun care Aqua Gel SPF 50, PA++++**

| Phase | Raw material | w/w-% |
|---|---|---|
| A | ABIL^{®} Care XL80 MB (Bis-PEG/PPG-20/5 PEG/PPG-20/5 Dimethicone; Methoxy PEG/PPG-25/4 Dimethicone; Caprylic/Capric Triglyceride) | 3.00 |
| | TEGOSOFT^{®} DEC (Diethylhexyl Carbonate) | 7.00 |
| | Dimethicone (5 cSt) | 2.00 |
| | TEGOSOFT^{®} XC MB (Phenoxyethyl Caprylate) | 3.00 |
| | ABIL^{®} Wax 9801 (Cetyl Dimethicone) | 2.00 |
| | **Organic polymer** | **2.00** |
| | Bis-ethylhexyloxyphenol methoxyphenyl triazine (Tinosorb S,BASF) | 3.00 |
| | Diethylamino Hydroxybenzoyl Hexyl Benzoate (Uvinul A plus Granular, BASF) | 4.00 |
| | Octocrylene | 5.00 |
| | Avobenzone (Parsol 1789, DSM) | 3.00 |
| | Homomenthyl Salicylate | 8.00 |
| | Ethylhexyl Salicylate | 5.00 |
| | Ethylhexyl Methoxycinnamate | 10.00 |
| B | Water | ad 100 |
| | Butylene Glycol | 3.00 |
| | Xanthan Gum | 0.20 |
| C | Sodium Acrylate/Sodium Acryloyldimethyl Taurate Copolymer (and) Isohexadecane (and) Polysorbate-80 (Simulgel EG, SEPPIC) | 1.50 |
| D | Phenoxyethanol, Ethylhexylglycerin (Euxyl PE 9010, Schülke & Mayr GmbH) | 0.70 |

**O/W Sun Care Cream with high protection SPF 50 PA+++**

| Phase | Raw material | w/w-% |
|---|---|---|
| A | TEGO^{®} Care 450 MB (Polyglyceryl-3 Methylglucose Distearate) | 3.00 |
| | TEGOSOFT^{®} TN (C12-15 Alkyl Benzoate) | 2.00 |
| | TEGO^{®} Alkanol 1618 (Cetearyl Alcohol) | 1.00 |
| | ABIL^{®} Wax 9840 (Cetyl Dimethicone) | 0.50 |
| | **Organic polymer** | **1.00** |
| | Bis-ethylhexyloxyphenol Methoxyphenyl Triazine (Tinosorb S, BASF SE) | 2.00 |
| | Butyl Methoxydibenzoylmethane | 3.00 |
| | Octocrylene | 8.00 |
| | Ethylhexyl Salicylate | 5.00 |
| | C12-15 Alkyl Benzoate;Titanium Dioxide;PEG-30 Dipolyhydroxystearate; Silica; Dimethicone (T-lique AB50Si, UNI-POWDER) | 8.90 |
| B | Water | ad 100 |
| | Glycerin | 3.00 |
| C | Phenylbenzimidazole Sulfonic Acid | 3.00 |
| | Tromethamine 78% | 2.00 |
| | Water | 4.00 |
| D | Acrylates/C10-30 Alkyl Acrylate Crosspolymer (2% solution in water) | 10.00 |
| E | Sodium Hydroxide (10% in water) | 0.40 |
| F | Phenoxyethanol, Ethylhexylglycerin (Euxyl PE 9010, Schülke & Mayr GmbH) | 0.70 |

**Transparent Sun Stick SPF 50, PA++++**

| Phase | Raw material | w/w-% |
|---|---|---|
| A | Octyldodecanol | 24.00 |
| | Dibutyl Ethyhexanoyl Glutamide (EB-21) | 2.50 |
| | Dibutyl Lauroyl Glutamide (GP-1) | 2.50 |
| | **Organic polymer** | **1.00** |
| B | TEGOSOFT^{®} Liquid (Cetearyl Ethylhexanoate) | 10.00 |
| | TEGOSOFT^{®} OP (Ethylhexyl Palmitate) | 14.00 |
| | TEGOSOFT^{®} XC MB (Phenoxyethyl Caprylate) | 1.50 |
| | ABIL^{®} Wax 9801 (Cetyl Dimethicone) | 1.00 |
| | REWOPAL^{®} PIB 1000 (Polyisobutene) | 6.00 |
| | AEROSIL R 812S (silica) | 7.00 |
| C | Ethylhexyl Methoxycinnamate | 7.00 |
| | Ethylhexyl Salicylate | 5.00 |
| | Octocrylene | 7.00 |
| | Bis-ethylhexyloxyphenol Methoxyphenyl Triazine (Tinosorb S, BASF SE) | 6.00 |
| | Diethylamino Hydroxybenzoyl Hexyl Benzoate (Uvinul A plus Granular, BASF) | 5.00 |

**Sun Care Cream SPF 15**

| Phase | Raw material | w/w-% |
|---|---|---|
| A | TEGO^{®} Care 450 MB (Polyglyceryl-3 Methylglucose Distearate) | 3.00 |
| | TEGIN^{®} M Pellets MB (Glyceryl Stearate) | 1.50 |
| | TEGO^{®} Alkanol 1618 (Cetearyl Alcohol) | 1.50 |
| | TEGOSOFT^{®} DEC (Diethylhexyl Carbonate) | 2.00 |
| | dermofeel^{®} sensolv MB (Isoamyl Laurate) | 7.00 |
| | ABIL^{®} 350 (Dimethicone) | 0.50 |
| | TEGOSOFT^{®} CR MB (Cetyl Ricinoleate) | 2.00 |
| | Bis-ethylhexyloxyphenol Methoxyphenyl Triazine (Tinosorb S, BASF) | 1.50 |
| | Butyl Methoxydibenzoylmethane | 1.00 |
| | Ethylhexyl Triazone | 0.75 |
| | Homomenthyl Salicylate | 1.50 |
| | Ethylhexyl Salicylate | 1.50 |
| | Octocrylene | 4.00 |
| | dermofeel^{®} TocoBalance (Tocopherol, Helianthus Annuus (Sunflower) Seed Oil) | 0.70 |
| | TEGO^{®} Feel C 10 (Cellulose) | 2.00 |
| | **Organic polymer** | **1.50** |
| | Phytosphingosine SLC (Salicyloyl Phytosphingosine) | 0.10 |
| B | Water | ad 100 |
| | Glycerin | 3.00 |
| | EDTA | 0.05 |
| | TEGO^{®} Cosmo C 100 (Creatine) | 0.50 |
| C | Xanthan Gum (Ketrol CG-SFT, CP Kelco) | 0.50 |
| D | TEGO^{®} Pep Up (Tetrapeptide-4; Glycerin) | 2.00 |
| E | Verstatil^{®} PC (Phenoxyethanol, Caprylyl Glycol) | 1.20 |
| | Summer Holiday (Düllberg) | 0.10 |
| | Tromethamine (Trisaminomethane, 30% in water) | q.s. |

**Sun Care spray SPF 30**

| **Phase** | **Raw material** | **w/w-%** |
|---|---|---|
| A | TEGO^{®} Care PBS 6 (Polyglyceryl-6 Stearate, Polyglyceryl-6 Behenate) | 3.00 |
| | TEGOSOFT^{®} TN (C12-15 Alkyl Benzoate) | 3.00 |
| | **Organic polymer** | **0.50** |
| | Bis-ethylhexyloxyphenol Methoxyphenyl Triazine (Tinosorb S, BASF) | 3.00 |
| | Butyl Methoxydibenzoylmethane | 2.00 |
| | Homosalate | 4.00 |
| | Ethylhexyl Salicylate | 4.00 |
| | Octocrylene | 4.00 |
| | TEGO^{®} Feel C 10 (Cellulose) | 1.00 |
| B | Aqua | ad 100 |
| | Gellan Gum (Kelcogel CG-HA, CP Kelco) | 0.03 |
| | EDTA | 0.05 |
| | Glycerin | 3.00 |
| C | Phenylbenzimidazole Sulfonic Acid | 2.00 |
| | Tromethamine | 0.88 |
| | Aqua | 7.12 |
| D | Acrylates/C10-30 Alkyl Acrylate Crosspolymer | 0.20 |
| | Aqua | 9.80 |
| E | Tromethamine (Trisaminomethane, 30% in water) | q.s. |
| F | Phenoxyethanol, Ethylhexylglycerin (Euxyl PE 9010, Schülke & Mayr GmbH) | 0.70 |

**Anhydrous stick**

| **Phase** | **Raw material** | **w/w-%** |
|---|---|---|
| A | **Organic polymer** | **10.00** |
| | TEGOSOFT^{®} TN (C12-15 Alkyl Benzoate) | 30.00 |
| | TEGOSOFT^{®} P (Isopropyl Palmitate) | 15.00 |
| | Octinoxate (Ethylhexyl Methoxycinnamate) | 7.50 |
| | Octyldodecanol | 37.50 |

**AP/Deo stick**

| Phase | Raw material | w/w-% |
|---|---|---|
| A | TEGOSOFT^{®} PBE (PPG-14 Butyl Ether) | 28.50 |
| | Cylcohexasiloxane; Cyclopentasiloxane | 5.10 |
| | TEGOSOFT^{®} TN (C12-15 Alkyl Benzoate) | 5.40 |
| | Hydrogenated Castor Oil | 4.90 |
| | **Organic polymer** | **5.00** |
| | Stearyl Alcohol | 28.00 |
| | Aluminium Zirconium Tetrachlorohydrex Gly | 23.10 |

**AP/Deo roll-on**

| **Phase** | **Raw material** | **w/w-%** |
|---|---|---|
| A | **Organic polymer** | **5.00** |
| | Mineral Oil | 4.00 |
| | Cyclopentasiloxane | 11.50 |
| | PEG-30 Dipolyhydroxystearate | 1.00 |
| B | Magnesium Sulfate | 0.50 |
| | Glycerin | 5.00 |
| | Aqua | ad 100 |
| | Aluminium Chlorohydrate (20% in water) | 40.00 |

**Deo Roll-on, PEG-free, ACH-free**

| **Phase** | **Raw material** | **w/w-%** |
|---|---|---|
| A | TEGO^{®} Care PS MB (Methyl Glucose Sesquistearate) | 1.75 |
| | TEGO^{®} Care PL 4 (Polyglyceryl-4 Laurate) | 0.25 |
| | TEGOSOFT^{®} AC MB (Isoamyl Cocoate) | 1.00 |
| | TEGOSOFT^{®} CT (Caprylic/Capric Triglyceride) | 1.00 |
| | **Organic polymer** | **1.00** |
| | TEGO^{®} Feel C 10 (Cellulose) | 1.00 |
| | Triethyl Citrate | 5.00 |
| | Caproyl/Lauroyl Lactyl Lactate (Dermosoft decalact liquid, Dr. Straetmans) | 1.00 |
| B | Aqua | ad 100 |
| | Glycerin | 3.00 |
| | Hydroxyethyl Cellulose (Natrosol 250 HHR, Aqualon) | 1.00 |
| C | Aqua | 0.57 |
| | Sodium Hydroxide | 0.03 |
| | p-Anisic Acid (Dermosoft 688, Dr. Straetmans) | 0.10 |
| | Glycerin | 0.30 |
| D | Citric Acid (10 % in water) | q.s. |

**O/W AP/Deo Roll-on**

| Phase | Raw material | w/w-% |
|---|---|---|
| A | TEGO^{®} Alkanol S 20 P (Steareth-20) | 1.00 |
| | TEGO^{®} Alkanol S 2 Pellets (Steareth-2) | 2.20 |
| | TEGOSOFT^{®} liquid (Cetearyl Ethylhexanoate) | 2.00 |
| | TEGOSOFT^{®} DEC (Diethylhexyl Carbonate) | 2.00 |
| | ABIL^{®} 350 (Dimethicone) | 0.50 |
| | TEGODEO^{®} PY 88 G (Zinc Ricinoleate) | 1.00 |
| | **Organic polymer** | **1.00** |
| B | Glycerin | 3.00 |
| | Water | ad 100 |
| C | Aluminium Chlorohydrate (50% in water; Reach 501 L, Reheis) | 30.00 |
| | Preservative, Perfume | q.s. |

**PEG- and ACH-free AP/Deo roll-on**

| Phase | Raw material | w/w-% |
|---|---|---|
| A | TEGO^{®} Care APD 18 MB (Polyglyceryl-6 Stearate; Polyglyceryl-6 Behenate; C18-22 Hydroxyalkyl Hydroxypropyl Guar) | 5.00 |
| | TEGOSOFT^{®} DEC (Diethylhexyl Carbonate) | 5.00 |
| | **Organic polymer** | **1.00** |
| B | Water | ad 100 |
| | Glycerin | 3.00 |
| | Potassium Alum | 5.00 |
| C | Preservative, Perfume | q.s. |

**AP/Deo Stick**

| Phase | Raw material | w/w-% |
|---|---|---|
| A | TEGOSOFT^{®} APS (PPG-11 Stearyl Ether) | 5.00 |
| | TEGOSOFT^{®} DEC (Diethylhexyl Carbonate) | 5.00 |
| | Stearyl Alcohol | 15.00 |
| | Hydrogenated Castor Oil | 1.50 |
| | **Organic polymer** | **1.00** |
| B | Cyclopentasiloxane (and) Cyclohexasiloxane | 49.00 |
| C | AEROSIL R 972 V (Silica Dimethylsilylate) | 3.00 |
| | Aluminum Chlorohydrate (Micro Dry Ultrafine, Reheis) | 20.00 |
| D | TEGO^{®} Cosmo P 813 (Polyglyceryl-3 Caprylate) | 0.50 |

**W/O Foundation**

| **Phase** | **Raw material** | **w/w-%** |
|---|---|---|
| A | Bis-(Glyceryl/Lauryl) Glyceryl Lauryl Dimethicone (and) Caprylic/Capric Triglyceride | 4.00 |
| | Isododecane | 3.33 |
| | TEGOSOFT^{®} XC MB (Phenoxyethyl Caprylate) | 3.33 |
| | Cyclomethicone | 3.33 |
| | **Organic polymer** | **2.00** |
| | CI 77891, Titanium Dioxide, Alumina, Triethoxycaprylylsilane (HOMBITAN AC360, Sachtleben) | 4.00 |
| | CI 77491, CI 77492, CI 77499 (Iron Oxide, Sicovit Brown 70 E 172, Rockwood Pigments) | 2.50 |
| | Talc | 2.00 |
| B | Dicaprylyl Carbonate, Stearalkonium Hectorite, Propylene Carbonate (Cosmedia Gel CC, BASF SE) | 3.00 |
| | Isododecane | 1.50 |
| | TEGOSOFT^{®} XC MB (Phenoxyethyl Caprylate) | 1.50 |
| | Cyclomethicone | 1.50 |
| C | Glycerin | 5.00 |
| | Magnesium Sulfate Heptahydrate | 1.50 |
| | Aqua | ad 100 |
| D | Phenoxyethanol, Methylparaben, Propylparaben, Ethylparaben (Phenonip XB, Clariant) | 0.70 |
| | Boron Nitride (Boroneige 1201, ESK) | 5.00 |

**Color cosmetics formulation**

| **Phase** | **Raw material** | **w/w-%** |
|---|---|---|
| A | Cetyl PEG/PPG-10/1 Dimethicone; Polyglyceryl-4 Isostearate | 3.00 |
| | ABIL^{®} 350 (Dimethicone) | 1.50 |
| | Isohexadecane | 6.70 |
| | TEGOSOFT^{®} DEC (Diethylhexyl Carbonate) | 5.00 |
| | **Organic polymer** | **2.00** |
| | CI 77891, Titanium Dioxide, Alumina, Triethoxy-caprylylsilane (HOMBITAN AC360, Sachtleben) | 8.00 |
| | CI 77499, Iron Oxides, Dimethicone (SA-C335000-10, Miyoshi Kasei) | 1.80 |
| | Talc | 2.00 |
| B | Disteardimonium Hectorite (Bentone 38V CG, Elementis Specialties) | 1.50 |
| | Aluminum Starch Octenylsuccinate (Dry-Flo PC, AkzoNobel) | 1.50 |
| | Nylon-12 | 1.50 |
| | TEGOSOFT^{®} DEC (Diethylhexyl Carbonate) | 2.00 |
| C | Glycerin | 2.00 |
| | Sodium Chloride | 0.80 |
| | Aqua | ad 100 |
| D | Phenoxyethanol, Methylparaben, Propylparaben, Ethylparaben (Phenonip XB, Clariant) | 0.80 |

**Cooling After Sun Gel**

| **Phase** | **Raw material** | **w/w-%** |
|---|---|---|
| A | TEGOSOFT^{®} SH (Stearyl Heptanoate) | 5.00 |
| | TEGOSOFT^{®} AC MB (Isoamyl Cocoate) | 5.00 |
| | **Organic polymer** | **0.20** |
| | Acrylates/C10-30 Alkyl Acrylate Crosspolymer | 0.20 |
| | Carbo mer | 0.20 |
| | TEGOLON^{®} 12-20 (Nylon-12) | 0.30 |
| B | Aqua | ad 100 |
| | Glycerin | 2.00 |
| | HyaCare^{®} (Sodium Hyaluronate) | 3.00 |
| | TEGO^{®} Cosmo C 100 (Creatine) | 0.50 |
| C | Ethanol | 2.00 |
| D | Sodium Hydroxide (10% in water) | 1.80 |
| E | Dipropylene Glycol; Methyparaben; Ethylparaben; Aqua; Methylisothiazolinone (Microcare MEM, Thor) | 0.80 |
| Z | Perfume | q.s. |

**W/O emulsion**

| **Phase** | **Raw material** | **w/w-%** |
|---|---|---|
| A | ISOLAN^{®} GPS (Polyglyceryl-4 Diisostearate/Polyhydroxystearate/ Sebacate) | 3.00 |
| | 9041 Silicone Elastomer Blend (Dow Corning) (Dimethicone, Dimethicone Crosspolymer) | 5.00 |
| | Cyclopentasiloxane | 6.40 |
| | TEGOSOFT^{®} DEC (Diethylhexyl Carbonate) | 6.40 |
| | **Organic polymer** | **2.00** |
| | Hydrogenated Castor Oil | 0.10 |
| | Paracera W 80 Wax (Paraffin, Microcristallina cera; Paramelt) | 0.10 |
| B | Aqua | ad 100 |
| | Glycerin | 2.00 |
| | Magnesium Sulfate Heptahydrate | 1.50 |
| C | Euxyl^{®} PE 9010 (Schülke & Mayr) (Phenoxyethanol, Ethylhexylglycerin) | 0.70 |

**W/O Cream**

| **Phase** | **Raw material** | **w/w-%** |
|---|---|---|
| A | ISOLAN^{®} PDI (Diisostearoyl Polyglyceryl-3 Dimer Dilinoleate) | 3.00 |
| | Hydrogenated Castor Oil | 0.20 |
| | Beeswax | 0.30 |
| | TEGOSOFT^{®} CT (Caprylic/Capric Triglyceride) | 5.00 |
| | TEGOSOFT^{®} P (Isopropyl Palmitate) | 5.00 |
| | TEGOSOFT^{®} OER MB (Oleyl Erucate) | 4.00 |
| | Prunus Amygdalus Dulcis (Sweet Almond) Oil | 5.00 |
| | **Organic polymer** | **2.00** |
| B | Aqua | ad 100 |
| | Glycerin | 5.00 |
| C | Magnesium Sulfate Heptahydrate | 1.00 |
| | Sodium Benzoate, Potassium Sorbate, Water (Euxyl K 712, Schülke & Mayr) | 0.50 |
| | Citric Acid (10% in water) | q.s. |

**Anti-Aging Day Care**

| **Phase** | **Raw material** | **w/w-%** |
|---|---|---|
| A | ABIL^{®} EM 90 (Cetyl PEG/PPG-10/1 Dimethicone Triglyceride) | 3.00 |
| | TEGOSOFT^{®} AC MB (Isoamyl Cocoate) | 7.50 |
| | TEGOSOFT^{®} DEC (Diethylhexyl Carbonate) | 7.00 |
| | **Organic polymer** | **2.50** |
| | HyaCare^{®} Filler CL (Aqua, Ethylhexyl Stearate, Sodium Hyaluronate Crosspolymer, Polyglyceryl-4 Diisostearate/Polyhydroxystearate/ Sebacate, Sodium Isostearate) | 2.50 |
| | Tocopherol | 0.50 |
| | Methyl Methacrylate Crosspolymer (Covabead LH 85, Sensient) | 2.00 |
| B | Aqua | ad 100 |
| | Sodium Chloride | 0.80 |
| | Glycerin | 4.00 |
| | Butylene Glycol | 4.00 |
| | TEGO^{®} Pep 4-Even (Tetrapeptide-30; Glycerin) | 2.50 |
| | Sodium Ascorbyl Palmitate | 1.50 |
| | Urea | 2.50 |
| | Sodium Bisulfite | 0.10 |
| Z | Preservative, Perfume | q.s. |

**W/O emulsion**

| **Phase** | **Raw material** | **w/w-%** |
|---|---|---|
| A | ABIL^{®} EM 90 (Cetyl PEG/PPG-10/1 Dimethicone) | 2.00 |
| | TEGOSOFT^{®} OP (Ethylhexyl Palmitate) | 5.00 |
| | TEGOSOFT^{®} CT (Caprylic/Capric Triglyceride) | 10.00 |
| | TEGOSOFT^{®} DEC (Diethylhexyl Carbonate) | 10.00 |
| | **Organic polymer** | **1.00** |
| | dermofeel^{®} viscolid MB (Hydrogenated Vegetable Oil) | 0.50 |
| B | Aqua | ad 100 |
| | Sodium Chloride | 0.50 |
| C | Phenoxyethanol, Ethylhexylglycerin (euxyl^{®} PE 9010, Schülke & Mayr) | 0.80 |

**Skin Replenishing Serum**

| **Phase** | **Raw material** | **w/w-%** |
|---|---|---|
| A | TEGO^{®} Care 165 (Glyceryl Stearate; PEG-100 Stearate) | 3.00 |
| | Stearyl Alcohol | 0.50 |
| | Isononyl Isononanoate | 4.00 |
| | Hydrogenated Polyisobutene | 3.00 |
| | TEGOSOFT^{®} APM (PPG-3 Myristyl Ether) | 3.00 |
| | **Organic polymer** | **0.50** |
| | Tocopherol | 0.50 |
| B | Aqua | ad 100 |
| | Butylene Glycol | 5.00 |
| | SKINMIMICS^{®} (Ceteareth-25; Glycerin; Cetyl Alcohol; Behenic Acid; Cholesterol; Ceramide NP; Ceramide NS; Ceramide EOS; Ceramide EOP; Ceramide AP; Caprooyl Phytosphingosine; Caprooyl Sphingosine) | 2.50 |
| C | Polyacrylamide; C13-14 Isoparaffin; Laureth-7 (Sepigel 305, Seppic) | 0.75 |
| Z | Preservative, Perfume | q.s. |

**Dual-Action Wrinkle Serum**

| **Phase** | **Raw material** | **w/w-%** |
|---|---|---|
| A | ABIL^{®} EM 97 S (Bis-PEG/PPG-14/14 Dimethicone; Dimethicone) | 1.00 |
| | ABIL^{®} EM 90 (Cetyl PEG/PPG-10/1 Dimethicone) | 1.50 |
| | Cyclopentasiloxane | 12.00 |
| | 9040 Silicone Elastomer Blend (Dow Corning) (Cyclopentasiloxane, Dimethicone Crosspolymer) | 3.00 |
| | TEGOSOFT^{®} DEC (Diethylhexyl Carbonate) | 3.00 |
| | **Organic polymer** | **0.75** |
| | HyaCare^{®} Filler CL (Aqua; Ethylhexyl Stearate; Sodium Hyaluronate Crosspolymer; Polyglyceryl-4 Diisostearate/ Polyhydroxystearate/Sebacate; Sodium Isostearate) | 2.50 |
| | Tocopherol | 0.50 |
| | Zinc Stearate | 0.50 |
| B | Aqua | ad 100 |
| | Sodium Chloride | 0.80 |
| | Glycerin | 4.00 |
| | Butylene Glycol | 4.00 |
| | TEGO^{®} Pep 4-17 (Tetrapeptide-21; Glycerin; Butylene Glycol; Aqua) | 0.50 |
| Z | Preservative, Perfume | q.s. |

**Lip filler color lipstick**

| **Phase** | **Raw material** | **w/w-%** |
|---|---|---|
| A | Ricinus Communis Seed Oil; (Castor Oil, Aldrich) | 21.70 |
| | TEGOSOFT^{®} CT (Caprylic/Capric Triglyceride) | 20.00 |
| | Triisostearin | 10.00 |
| | TEGOSOFT^{®} OER MB (Oleyl Erucate) | 5.00 |
| | TEGOSOFT^{®} MM MB (Myristyl Myristate) | 7.50 |
| | Euphorbia Cerifera Wax (Kahlwax 2039L, KahlWax) | 6.00 |
| | Copernicia Cerifera Cera (Kahlwax 2442L, KahlWax) | 3.00 |
| | Ozokerite (Kahlwax 1899, KahlWax) | 4.00 |
| | Polyglyceryl-3 Beeswax (Cera Bellina, Koster Keunen) | 2.00 |
| | **Organic polymer** | **2.00** |
| | CI 15850 (Red no.7), Hydrogenated Polydecene, Hydroxystearic Acid (Creasperse Bergonia, The Innovation Company) | 2.00 |
| B | Mica, CI 77491 (1:1) (Colorona Bordeaux, Merck) | 8.50 |
| | TEGO^{®} Feel C 10 (Cellulose) | 3.00 |
| C | Perfume | 0.30 |
| D | HyaCare^{®} Filler CL (Aqua; Ethylhexyl Stearate; Sodium Hyaluronate Crosspolymer; Polyglyceryl-4 Diisostearate/Polyhydroxystearate/Sebacate; Sodium Isostearate) | 5.00 |

**Lip filler lipstick**

| **Phase** | **Raw material** | **w/w-%** |
|---|---|---|
| A | TEGOSOFT^{®} G 20 (Octyldodecanol) | 15.00 |
| | TEGOSOFT^{®} CT (Caprylic/Capric Triglyceride) | 10.00 |
| | TEGOSOFT^{®} OER MB (Oleyl Erucate) | 2.00 |
| | TEGOSOFT^{®} MM MB (Myristyl Myristate) | 5.00 |
| | Ricinus Communis Seed Oil (Castor Oil, Aldrich) | 31.70 |
| | Olus Oil (Cremerlin^{®} PURA, Cremer Care) | 10.00 |
| | Stearyl Beeswax; Behenyl Beeswax (BW Ester BW67, Koster Keunen) | 5.00 |
| | Ozokerite (Kahlwax 1899, KahlWax) | 5.00 |
| | Cera Alba (Kahlwax 8104, KahlWax) | 4.00 |
| | Euphorbia Cerifera Wax (Kahlwax 2039L, KahlWax) | 2.00 |
| | **Organic polymer** | **5.00** |
| B | Tocopherol | 0.10 |
| | Perfume | 0.20 |
| C | HyaCare^{®} Filler CL (Aqua; Ethylhexyl Stearate; Sodium Hyaluronate Crosspolymer; Polyglyceryl-4 Diisostearate/Polyhydroxystearate/Sebacate; Sodium Isostearate) | 5.00 |

**W/O emulsion**

| **Phase** | **Raw material** | **w/w-%** |
|---|---|---|
| A | **Organic polymer** | **1.00** |
| | Cylcopentasiloxane; PEG/PPG-18/18 Dimethicone | 10.00 |
| | Cylcopentasiloxane | 16.00 |
| | TEGOSOFT^{®} TN (C12-15 Alkyl Benzoate) | 0.50 |
| B | Aqua | ad 100 |
| | Glycerin | 5.00 |
| | Sodium Chloride | 2.00 |
| C | Propylene Glycol; Diazolidinyl Urea; Methylparaben; Propylparaben | 0.50 |

**O/W Cream**

| **Phase** | **Raw material** | **w/w-%** |
|---|---|---|
| A | dermofeel^{®} NC MB (Polyglyceryl-3 Distearate; Glyceryl Stearate Citrate) | 3.00 |
| | TEGIN^{®} M Pellets MB (Glyceryl Stearate) | 0.90 |
| | Stearyl Alcohol | 0.60 |
| | TEGOSOFT^{®} P (Isopropyl Palmitate) | 7.00 |
| | Prunus Amygdalus Dulcis Oil | 5.00 |
| | TEGOSOFT^{®} CT (Caprylic/ Capric Triglyceride) | 4.50 |
| | Triisostearin | 3.50 |
| | **Organic polymer** | **3.00** |
| B | Aqua | ad 100 |
| | Glycerin | 3.00 |
| | Xanthan Gum (Keltrol CG-SFT, CP Kelco) | 0.30 |
| C | Sodium hydroxide (10 % in water) | q.s. |
| Z | Preservative, Perfume | q.s. |

**After Shave Lotion**

| **Phase** | **Raw material** | **w/w-%** |
|---|---|---|
| A | ABIL^{®} Care XL 80 MB (Bis-PEG/PPG-20/5 PEG/PPG-20/5 Dimethicone; Methoxy PEG/PPG-25/4 Dimethicone; Caprylic/Capric Triglyceride) | 1.50 |
| | TEGOSOFT^{®} CT (Caprylic/Capric Triglyceride) | 3.00 |
| | Cyclomethicone | 3.00 |
| | **Organic polymer** | **0.50** |
| | Tocopheryl Acetate | 0.50 |
| | Menthyl Lactate (Frescolat ML) | 0.50 |
| B | TEGO^{®} SMO 80 V (Polysorbate 80) | 0.50 |
| | Aqua | ad 100 |
| | Glycerin | 2.00 |
| | Alcohol | 15.00 |
| C | Carbo mer | 0.20 |
| | Xanthan Gum | 0.10 |
| | TEGOSOFT^{®} CT (Caprylic/Capric Triglyceride) | 1.60 |
| D | Sodium hydroxide (10 % in water) | q.s. |
| Z | Preservative, Perfume | q.s. |

**W/O emulsion**

| **Phase** | **Raw material** | **w/w-%** |
|---|---|---|
| A | ABIL^{®} EM 97 (Bis-PEG/PPG-14/14 Dimethicone; Dimethicone) | 2.00 |
| | **Organic polymer** | **3.00** |
| | Cyclomethicone | 11.50 |
| | TEGOSOFT^{®} P (Isopropyl Palmitate) | 4.00 |
| | TEGOSOFT^{®} M (Isopropyl Myristate) | 4.00 |
| | Mineral Oil | 1.00 |
| | PEG-30 Dipolyhydroxystearate | 0.50 |
| B | Aqua | ad 100 |
| | Magnesium Sulfate | 0.50 |
| | Glycerin | 5.00 |
| C | Propylene Glycol; Diazolidinyl Urea; Methylparaben; Propylparaben | 1.00 |

**W/O emulsion**

| **Phase** | **Raw material** | **w/w-%** |
|---|---|---|
| A | ISOLAN^{®} GPS (Polyglyceryl-4 Diisostearate/Polyhydroxystearate/ Sebacate) | 3.00 |
| | Cyclopentasiloxane | 6.40 |
| | TEGOSOFT^{®} DEC (Diethylhexyl Carbonate) | 6.40 |
| | **Organic polymer** | **2.00** |
| | Dicaprylyl Carbonate, Stearalkonium Hectorite, Propylene Carbonate (Cosmedia^{®} Gel CC, Cognis) | 3.00 |
| B | Aqua | ad 100 |
| | Glycerin | 2.00 |
| | Magnesium Sulfate Heptahydrate | 1.50 |
| C | Phenoxyethanol, Ethylhexylglycerin (euxyl^{®} PE 9010, Schülke & Mayr) | 0.70 |

**Retinol Cream**

| **Phase** | **Raw material** | **w/w-%** |
|---|---|---|
| A | TEGOSOFT^{®} P (Isopropyl Palmitate) | 10.00 |
| | Simmondsia Chinensis (Jojoba) Seed Oil | 1.00 |
| | Cyclotetrasiloxane | 5.00 |
| | Cetearyl Alcohol, Dicetyl Phosphate, Ceteth-10 Phosphate (Crodafos CES, Croda) | 5.00 |
| | PEG/PPG-18/18 Dimethicone | 2.50 |
| | Prunus Armeniaca (Apricot) Kernel Oil | 0.40 |
| | Prunus Amygdalis Dulcis (Sweet Almond) Oil | 0.60 |
| | **Organic polymer** | **1.50** |
| B | Aqua | ad 100 |
| | Xanthan Gum | 0.75 |
| | Glycerin | 1.00 |
| C | InuMax Advanced Retinol (Aqua; Caprylic/Capric Triglyceride; Glycerin; Polysorbate 20; Retinol; Inulin Lauryl Carbamate; Behentrimonium Chloride; Sucrose Laurate; Disodium EDTA; Phenoxyethanol; Benzoic Acid; Dehydroacetic Acid; Ethylhexylglycerin | 3.75 |
| D | Preservative, Perfume | q.s. |

**Anti-aging moisturizer**

| **Phase** | **Raw material** | **w/w-%** |
|---|---|---|
| A | TEGO^{®} Care 450 MB (Polyglyceryl-3 Methylglucose Distearate) | 3.00 |
| | TEGIN^{®} M Pellets MB (Glyceryl Stearate) | 2.00 |
| | Stearyl Alcohol | 1.00 |
| | TEGOSOFT^{®} MM MB (Myristyl Myristate) | 1.00 |
| | TEGOSOFT^{®} DO (Decyl Oleate) | 8.00 |
| | TEGOSOFT^{®} OS (Ethylhexyl Stearate) | 9.00 |
| | Phytosphingosine SLC (Salicyloyl Phytosphingosine) | 0.10 |
| | **Organic polymer** | **2.50** |
| B | Glycerin | 3.00 |
| | Aqua | ad 100 |
| C | Carbo mer | 0.20 |
| | TEGOSOFT^{®} OS (Ethylhexyl Stearate) | 0.80 |
| D | Sodium hydroxide (10 % in water) | q.s. |
| Z | Preservative, Perfume | q.s. |

**Shaving Cream**

| Phase | Raw material | w/w-% |
|---|---|---|
| A | Stearic Acid | 18.00 |
| | Mineral Oil | 5.00 |
| | Polysorbate 60 | 5.00 |
| | **Organic polymer** | **1.00** |
| | Dow Corning 200 Fluid 1000cSt | 1.00 |
| B | Aqua | ad 100 |
| | Glycerin | 5.00 |
| | DMDM Hydantoin | 0.50 |
| | Triethanolamin | 0.06 |

**Sprayable Hairmilk, PEG-free**

| Phase | Raw material | w/w-% |
|---|---|---|
| A | Water | ad 100 |
| | Lactic Acid, 80%-ig | 0.40 |
| B | Glycerin | 1.20 |
| | TEGIN^{®} G 1100 Pellets (Glycol Distearate) | 0.50 |
| | TEGO^{®} Care PS (Methyl Glucose Sesquistearate) | 1.20 |
| | **Organic polymer** | **2.50** |
| | Perfume, preservative | q.s. |

**Strong Hold Styling Gel**

| Phase | Raw material | w/w-% |
|---|---|---|
| | TEGO^{®} Carbomer 141 (Carbomer) | 1.20 |
| | Water | ad 100 |
| | Sodium Hydroxide (25% in water) | 2.60 |
| | PVP/VA W-735 (PVP/VA Copolymer, Ashland) | 16.00 |
| | **Organic polymer** | **5.00** |
| | Alcohol Denat. | 10.00 |
| | TAGAT^{®} O 2 V (PEG-20 Glyceryl Oleate) | 2.00 |
| | Perfume | 0.30 |
| | ABIL^{®} B 88183 PH (PEG/PPG-20/6 Dimethicone) | 0.30 |
| | Preservative | q.s |

**Leave-In Conditioner Foam**

| Phase | Raw material | w/w-% |
|---|---|---|
| | **Organic polymer** | **3.50** |
| | TEGOSOFT^{®} PC 41 (Polyglyceryl-4 Caprate) | 3.00 |
| | Perfume | 0.20 |
| | TEGO^{®} Betain 810 (Capryl/Capramidopropyl Betaine) | 2.00 |
| | Water | ad 100 |
| | TEGO^{®} Cosmo C 100 (Creatine) | 0.50 |
| | Hydroxypropyl Methylcellulose | 0.30 |
| | Citric Acid (30% in water) | 0.10 |
| | Preservative | q.s. |

**Leave-In Conditioner Spray**

| Phase | Raw material | w/w-% |
|---|---|---|
| | TAGAT^{®} CH-40 (PEG-40 Hydrogenated Castor Oil) | 2.00 |
| | Ceramide VI (Ceramide 6 II) | 0.10 |
| | Perfume | 0.20 |
| | Glycerin | 1.00 |
| | Water | ad 100 |
| | **Organic polymer** | **5.00** |
| | LACTIL (Sodium Lactate; Sodium PCA; Glycine; Fructose; Urea; Niacinamide; Inositol; Sodium benzoate; Lactic Acid) | 2.00 |
| | TEGO^{®} Betain F 50 (Cocamidopropyl Betaine) | 2.30 |
| | Citric Acid (10% in water) | 2.00 |

## Claims

1. A polymer comprising monomeric units of general formula (I) 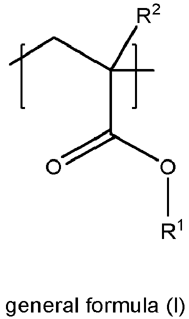 with
R¹ = independently from each other selected from the group consisting of alkyl radicals and alkenyl radicals, which both may be branched or straight chained, unsubstituted or substituted, preferred are alkyl radicals having 6 to 30 carbon atoms, preferably 10 to 26, more preferred 12 to 24,
R² = independently from each other selected from the group consisting of H and methyl, preferably H,
with the monomeric units of general formula (I) making up for at least 90 wt.-%, preferably 95 wt.-%, of the total weight of the polymer,
**characterized in, that** the polymer has a polydispersity index PDI of 4.5 to 20, preferably 4.6 to 15, more preferably 4.8 to 13.

2. The polymer according to claim 1 **characterized in, that** the at least 90 wt.-% of all R¹ are selected from the group of linear alkyl and alkenyl, preferably alkyl radicals with 12 to 22 carbon atoms, with stearyl and behenyl especially preferred.

3. The polymer according to claim 1 or 2 **characterized in, that** the polymer has a melting point in the range of 31 °C to 75 °C, preferably 35 °C to 72 °C, more preferably 40 °C to 69 °C.

4. The polymer according to any of the preceding claims **characterized in, that** the polymer has a weight average molecular weight Mₙ in the range of from 3,000 to 300,000, preferably 4,000 to 200,000, more preferably 5,000 to 100,000, g/mol.

5. The polymer according to any of the preceding claims **characterized in, that** the polymer has a weight average molecular weight M_{w} in the range of from 13,500 to 6,000,000, preferably 18,000 to 3,000,000, more preferably 24,000 to 1,300,000, g/mol.

6. A process for preparing a polymer comprising the steps of
A) providing 1 part by weight of monomers of general formula (II) 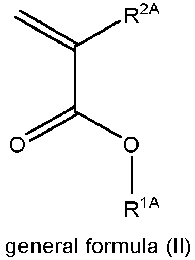 with
R^{1A} = independently from each other selected from the group consisting of alkyl radicals and alkenyl radicals, which both may be branched or straight chained, unsubstituted or substituted, preferred hydrocarbons are alkyl radicals having 6 to 30 carbon atoms, preferably 10 to 26, more preferred 12 to 24,
R^{2A} = independently from each other selected from the group consisting of H and methyl, preferably H,
B) addition of at least one initiator to polymerize the monomers and performing a radical polymerisation,
C) addition of 1 to 15, preferably 2 to 10, more preferably 3 to 8, further parts by weight of monomers of general formula (II),
D) addition of at least one initiator to polymerize the monomers and performing a radical polymerisation, optionally
E) removal of excess of monomers, and, optionally,
F) purification of the obtained polymer.

7. The process according to claim 6 **characterized in, that** the initiator is selected from the group of 2,2'-azo-bis(2-methyl propionitrile), 2,2'-azodi(2-methylbutyronitrile), 1,1'-azodi(hexahydrobenzonitrile), 4,4'-azo-bis(4-cyanovaleric acid), 2,2'-azo-bis(2,4-dimethyl valeronitrile), and 2,2'-azo-bis(2-cyclopropyl propionitrile), 2,2'-azo-bis(2-cyclobutyl propionitrile), 2,2'-azo-bis(2-cyclobutyl propionitrile), 2,2'-azo-bis (2,4-dimethyl valeronitrile), 1,1'-azo-bis(1-cycloheptanenitrile), 2,2'-azo-bis(methylheptylonitrile), 2,2'-azo-bis(2-cyclohexyl propionitrile), azo-bis-isobutyramidine 2HCl, phenyl-azo-triphenylmethane, 4-hydroxyphenyl-azo-triphenylmethane, peroxide and peroxy compounds, such as benzoyl peroxide, tert-butyl peroxy pivalate, tert-amyl peroxypivalate, acetyl peroxide, propionyl peroxide, 2-isopropionyl peroxide, butyryl peroxide, diisobutyryl peroxide, dilauroyl peroxide, didecanoyl peroxide, cumyl peroxyneodecanoate, 1,1,3,3-tetramethylbutyl peroxyneodecanoate, tert-butyl peroxydiethylacetate, tert-amyl peroxy-2-ethylhexanoate, tert-amyl peroxy-2-ethylhexanoate, 2-methoxybenzoyl peroxide, cumyl peroxyneoheptanoate, tert-amyl peroxyneodecanoate, tert-butyl peroxyneodecanoate, tert-butyl peroxyneoheptanoate, tert-amyl peroxyacetate, 4 -benzylidenebutyryl peroxide, methyl phthaloyl peroxide, 1,1-di(tert-amylperoxy)cyclohexane, 3,6,9-triethyl-3,6,9-trimethyl-1,4,7-triperoxonane, hydroperoxides such as Isopropylcumyl hydroperoxide, 1,1,3,3-tetramethylbutyl hydroperoxide, cumyl hydroperoxide, tert-Butyl hydroperoxide, tert-amyl hydroperoxide, carbonates such as diethyl peroxydicarbonate, tert-butylperoxy isopropyl carbonate, tert-butylperoxy 2-ethylhexyl carbonate, di-sec-butyl peroxydicarbonate, diisopropyl peroxydicarbonate, di(4-tert-butylcyclohexyl) peroxydicarbonate, di(2-ethylhexyl) peroxydicarbonate, dicetyl peroxydicarbonate, dimyristyl peroxydicarbonate, tert-amylperoxy 2-ethylhexyl carbonate, tert-butylperoxy isopropyl carbonate, tert-butylperoxy 2-ethylhexyl carbonate, ethyl tert-butyl peroxalate; benzyl (tert-butyl peroxy) oxalate; tertiary-butyl-N-(3-tolylperoxy) carbamate and persalt compounds, such as potassium persulfate and mixtures thereof.

8. The process according to claim 6 or 7 **characterized in, that** in process step B) and / or D) the addition of the at least one initiator to polymerize the monomers is conducted in at least two portions while performing the radical polymerisation after each addition of the initiator portion.

9. The process according to any of claims 6 to 8 **characterized in, that** in process step A) and/or C), preferably A) and C), at least one chain transfer agent is added.

10. A polymer obtainable by the process of any of the claims 6 to 9.

11. A personal care formulation containing at least one polymer of any of the claims 1 to 5 or 10.

12. Use of at least one polymer of any of the claims 1 to 5 or 10 or a formulation according to claim 11 for forming a film on a surface, especially skin and/or hair.

13. Use of at least one polymer of any of the claims 1 to 4 or 10 or a formulation according to claim 11 for giving a dry skin feel to formulations, especially emulsions.

14. Use of at least one polymer of any of the claims 1 to 4 or 10 or a formulation according to claim 11 for retaining a fragrance on a surface, especially skin and/or hair.

15. Use of at least one polymer of any of the claims 1 to 4 or 10 or a formulation according to claim 11 for the dispersion of solid pigments
